# FASCICULE DE BREVET EUROPEEN

(11) **EP 3 413 989 B1**
(45) Date de publication et mention de la délivrance du brevet: **03.06.2020**
(21) Numéro de dépôt: 17707646.0
(22) Date de dépôt: 08.02.2017
(51) Int. Cl.: B01D 1/14, B01D 1/16, B01D 46/02, C02F 1/04, F23G 7/00, C02F 1/12, C02F 1/66, C02F 103/06

(54) **PROCEDE ET INSTALLATION DE TRAITEMENT D'UN LIXIVIAT OU D'UN CONCENTRAT DE LIXIVIAT CHARGE EN CONSTITUANTS MINERAUX ET ORGANIQUES**
VERFAHREN UND ANLAGE ZUR BEHANDLUNG VON SICKERWASSER ODER SICKERWASSERKONZENTRAT, DAS MIT MINERALISCHEN ODER ORGANISCHEN BESTANDTEILEN BELADEN IST
METHOD AND FACILITY FOR TREATING A LEACHATE OR A LEACHATE CONCENTRATE LOADED WITH MINERAL AND ORGANIC CONSTITUENTS

(30) Priorité: 09.02.2016 FR 1651031
(43) Date de publication de la demande: 19.12.2018
(73) Titulaire: Suez RV Bioenergies, 78440 Gargenville (FR)
(72) Inventeur: SPILLEMAECKER, Michel, 78550 Richebourg (FR); AMIOT, Aurélien, 92700 Colombes (FR); THIRIET, Nicolas, 54610 Clemery (FR)
(74) Mandataire: Ernest Gutmann - Yves Plasseraud S.A.S.
(86) Numéro de dépôt international: PCT/FR2017/050284
(87) Numéro de publication internationale: WO 2017/137698

(56) Documents cités:
- EP-A1- 0 127 519
- CN-B- 102 211 794
- CN-U- 204 310 834
- JP-A- 2004 249 226
- Anonymous: "EVALIX (TM) - Traiter les effluents concentrés en valorisant le biogaz de votre installation", , 31 mars 2014 (2014-03-31), pages 1-2, XP055311163, GARGENVILLE, FR Extrait de l'Internet: URL:www.innovations.suez-environnement.com /dl.php?fiche=139&f=513ed07fa686e6e75c6389 2c5e6083ad$ [extrait le 2016-10-17]

## Description

La présente invention concerne un procédé de traitement d'un lixiviat ou d'un concentrat de lixiviat chargé en constituants minéraux et organiques, un dispositif d'atomisation et une installation de traitement dudit lixiviat ou dudit concentrat de lixiviat.

Les lixiviats sont le résultat de la percolation de l'eau au travers des déchets domestiques, agricoles ou industriels stockés dans une décharge, appelée également en France Installation de Stockage de Déchets Non Dangereux (ISDND), ou Centre d'Enfouissement Technique de classe 2 (CET) ou Centre de Stockage des Déchets Ultimes (CSDU), au cours de laquelle ces eaux se chargent en constituants minéraux et organiques. Les lixiviats sont classés principalement en 3 types selon l'âge de la décharge et par conséquent en fonction de la quantité de matière organique présente. Les lixiviats jeunes sont caractérisés par une charge organique élevée relativement biodégradable, les lixiviats intermédiaires ont une charge organique un peu moins élevée et se dégradent moins facilement, et les lixiviats âgés ont une faible charge organique et sont difficilement biodégradables. Ainsi, les lixiviats d'une décharge plus ancienne sont moins chargés en constituants organiques qu'une décharge plus récente, une partie des constituants organiques s'étant dégradée, mais sont plus difficiles à traiter par un traitement biologique classique. La composition des lixiviats varie également en fonction de la nature des déchets ainsi que des conditions climatiques (Kulikowska D. et al. Bioresource. Technol. 99 (2008) 5981-5985).

Les principaux polluants présents dans les lixiviats sont les substances organiques (acides gras volatils, substances humiques et fulviques, ...) généralement exprimées en Demande Chimique en Oxygène (DCO) ou Demande Biochimique en Oxygène (DBO) et les substances minérales (sels chlorures, sulfates, borates,....) ainsi que les micropolluants organiques (hydrocarbures, composés aromatiques, ...) et les métaux lourds présents à l'état de traces (Pronost R. et al. Production, caractérisation, traitement, Environnement & Technique. 196 (2000) 25-29).

La forte concentration polluante des lixiviats, notamment issus des déchets, constitue une menace pour l'environnement, générant un coût économique et environnemental élevé.

De nombreuses techniques de dépollution des lixiviats ont donc été mises au point. Les lixiviats peuvent par exemple subir un traitement biologique associé à un traitement membranaire de type ultrafiltration (UF-BRM). En complément, un traitement de filtration de type osmose inverse (OI) ou nanofiltration ou charbon actif en grain (CAG) peut y être associé. Il existe également des traitements par évaporation de type flot tombant ou circulation forcée à un ou plusieurs effets.

Un système EVALIX™, développé en 1995, permet notamment de traiter des lixiviats par évaporation à haute température au moyen d'un brûleur de type Isoflash™ et en utilisant la chaleur issue de la combustion du biogaz.

Le brûleur de type Isoflash™ a été développé par la société VICARB et décrit notamment dans le brevet EP0127519. Dans un brûleur de type Isoflash™, le produit à traiter est introduit dans l'axe d'une phase gazeuse mise sous forme d'un écoulement hélicoïdal symétrique (tourbillon) et à haute température, permettant une évaporation très rapide du produit à traiter. D'autres procédés de traitement de lixiviat sont décrits dans les documents CN102211794, JP2004249226 et CN204310834.

Toutefois, les lixiviats ou les concentrats de lixiviats contiennent généralement de l'ammoniac dissous. Avant de réaliser un traitement thermique, il s'avère donc nécessaire de neutraliser l'ammoniaque. En effet, en l'absence de neutralisation, l'ammoniac dissous se retrouve, après évaporation, sous forme de gaz et n'est pas capté dans les étapes de filtration, entraînant des problèmes de pollution accompagnés d'émanations malodorantes.

Par ailleurs, des problèmes de condensation liés à l'émanation des vapeurs peuvent apparaître et compromettre l'efficacité du système.

Le traitement des lixiviats ou des concentrats de lixiviats requiert donc que des procédés améliorés soient développés, qui intègrent le traitement de composés polluants supplémentaires, en particulier de l'ammoniaque et maîtrisent mieux les rejets en sortie de traitement.

Les inventeurs ont amélioré le procédé de traitement des lixiviats par évaporation à haute température, tel qu'il est par exemple mis en œuvre dans le système EVALIX™, en éliminant les problèmes ci-dessus mentionnés et en optimisant la phase d'évaporation des lixiviats ou des concentrats de lixiviats. Le procédé et l'installation selon l'invention, définis dans les revendications 1 et 8, permettent de récupérer les éléments polluants des lixiviats ou des concentrats de lixiviats sous forme solide et non dégradée tout en respectant les réglementations environnementales en vigueur et en préservant le milieu naturel par l'absence de rejet liquide. Les coûts de stockage et de traitement des lixiviats ou des concentrats de lixiviats à traiter sont également réduits par rapport aux méthodes classiques.

Le procédé de traitement d'un lixiviat ou d'un concentrat de lixiviat selon l'invention comprend 6 étapes définies comme suit:
1. Pré-traitement d'un lixiviat ou d'un concentrat de lixiviat par acidification, notamment pour neutraliser l'ammoniaque,
2. Atomisation (évaporation par effet « flash » à haute température et séchage),
3. Séparation solide/vapeur et récupération des poussières obtenues sur un dispositif de filtration,
5. Récupération et stockage des poussières obtenues,
6. Optionnellement, un abattement de panache.

La présente invention décrit un procédé de traitement d'un lixiviat ou d'un concentrat de lixiviat chargé en constituants minéraux et organiques, la charge en constituants minéraux et organiques comprenant de 0,1% à 30% en matière sèche.

La charge en constituants minéraux et organiques d'un lixiviat brut est comprise généralement dans l'intervalle de 0,1% à 5% en matière sèche. La charge en constituants minéraux et organiques d'un concentrat de lixiviat est comprise généralement dans l'intervalle de 5% à 30% en matière sèche.

La présente invention concerne un procédé de traitement d'un lixiviat ou d'un concentrat de lixiviat chargé en constituants minéraux et organiques, la charge en constituants minéraux et organiques comprenant de 0,1% à 30% en matière sèche, dans lequel :
a. on introduit le lixiviat ou le concentrat de lixiviat dans une cuve d'acidification dans laquelle sont ajoutés un acide puis le cas échéant une composition anti-mousse afin d'obtenir un mélange dont le pH est compris dans l'intervalle de 5 à 6,5, ledit mélange étant ensuite mis sous agitation pendant une durée de 2h à 4h, de préférence 3h, puis le pH est neutralisé (i) dans la cuve d'acidification ou (ii) après avoir transféré ledit mélange, dans une cuve de tranquillisation,
b. on pulvérise le lixiviat ou le concentrat de lixiviat traité à l'issue de l'étape a. sous forme de microgouttes dans des gaz de combustion chauds ayant une température égale ou supérieure à 900°C dans un dispositif d'atomisation; des gaz comprenant des vapeurs d'eau, des poussières et des gaz de combustion et optionnellement des résidus non gazeux étant obtenus,
c. on transfère les gaz comprenant des vapeurs d'eau, des poussières et des gaz de combustion obtenus à l'étape b. vers un dispositif de filtration, puis on récupère les poussières comprenant les constituants minéraux et organiques,
d. optionnellement, on transfère les gaz issus du dispositif de filtration de l'étape c. vers un dispositif d'abattement de panache.

Dans un mode de réalisation particulier, la présente invention concerne un procédé de traitement d'un lixiviat ou d'un concentrat de lixiviat chargé en constituants minéraux et organiques, la charge en constituants minéraux et organiques comprenant de 0,1% à 30% en matière sèche, dans lequel :
a. on introduit le lixiviat ou le concentrat de lixiviat dans une cuve d'acidification dans laquelle sont ajoutés un acide puis le cas échéant une composition anti-mousse afin d'obtenir un mélange dont le pH est compris dans l'intervalle de 5 à 6,5, ledit mélange étant ensuite mis sous agitation pendant une durée de 2h à 4h, de préférence 3h, puis le pH est neutralisé (i) dans la cuve d'acidification ou (ii) après avoir transféré ledit mélange, dans une cuve de tranquillisation,
b. on pulvérise à l'aide d'une canne de pulvérisation bi-fluide, par exemple assistée à l'air ou utilisant de l'air, en particulier de l'air comprimé, le lixiviat ou le concentrat de lixiviat traité à l'issue de l'étape a. sous forme de microgouttes dans des gaz de combustion chauds ayant une température égale ou supérieure à 900°C et produits par un brûleur à refroidissement par air, on réalise un « contact flash » entre le lixiviat ou le concentrat de lixiviat pulvérisé et les gaz de combustion chauds dans un dispositif d'atomisation; des gaz comprenant des vapeurs d'eau, des poussières et des gaz de combustion et optionnellement des résidus non gazeux étant obtenus ; ces résidus non gazeux, par exemple des résidus liquides, solides et/ou pâteux, étant extraits par une conduite située dans la partie basse du dispositif d'atomisation et les gaz comprenant des vapeurs d'eau, des poussières et des gaz de combustion étant amenés vers un dispositif de filtration par une conduite située dans la partie basse du dispositif d'atomisation,
c. (i) on transfère les gaz comprenant des vapeurs d'eau, des poussières et des gaz de combustion obtenus à l'étape b. vers un dispositif de filtration, puis (ii) suite à un décolmatage des filtres à l'air, par exemple à l'air comprimé, on récupère les poussières comprenant les constituants minéraux et organiques par la partie basse du dispositif de filtration au moyen d'un sas, par exemple un sas constitué de deux vannes guillotines,
d. optionnellement, on transfère les gaz issus du dispositif de filtration de l'étape c. vers un dispositif d'abattement de panache au moyen d'une conduite ou cheminée d'extraction du dispositif de filtration, on laisse ensuite ces gaz pendant un temps très bref, par exemple pendant 0,3 seconde, dans une chambre à combustion contenant des gaz de combustion chauds ayant une température comprise dans l'intervalle de 900°C à 1200°C, de préférence de 900°C, et produits par un brûleur puis on transfère le mélange comprenant les gaz et des gaz de combustion chauds dans un dispositif de mélange dans lequel ce mélange est amené à une température comprise dans l'intervalle de 450°C à 550°C avant de le rejeter dans l'atmosphère sous forme de vapeurs sèches.

Dans le contexte de l'invention, le terme « *lixiviat* » fait référence à un liquide résiduel qui provient de la percolation de l'eau à travers des matériaux polluants comme indiqué ci-dessus, notamment ceux des ISDND ou CET ou CSDU. Les lixiviats sont constitués des eaux d'infiltration, de ruissellement et de précipitation ayant percolé à travers la masse de déchets enfouis et sont de ce fait chargés tant en matières minérales qu'organiques, la charge en ces matières comprenant de 0,1% à 5% en matière sèche.

Dans le contexte de l'invention, le terme « *concentrat de lixiviat* » fait référence à un lixiviat dont la charge en constituants minéraux et organiques comprend de 5% à 30% en matière sèche. Un concentrat de lixiviat est obtenu suite à une étape de traitement par évaporation ou filtration, par exemple par filtration osmose ou nanofiltration.

Dans le contexte de l'invention, le terme « *biogaz »* fait référence non seulement aux gaz produits par le traitement (y compris le stockage) de déchets des décharges d'ordures ménagères ou émanant de déchets banals, préférentiellement de déchets traités dans des ISDND ou CET ou CSDU, mais aussi de façon plus générale à tout gaz émanant de méthaniseurs agricoles et/ou industriels, notamment produits par les rejets de l'industrie agro-alimentaire, des biotechnologies et ainsi qu'aux gaz émanant des stations d'épuration d'eau, des bioréacteurs, digesteurs, fermenteurs, silos, enceintes de stockage ou de transport de compost ou de matières agricoles ou alimentaires ou à base d'algues, ou des élevages. Ce biogaz est principalement composé de méthane en une proportion pouvant s'étendre de 25 à 75%, de gaz carbonique et d'autres gaz majeurs comme l'azote ou l'oxygène ainsi que de gaz à l'état de traces, en particulier d'hydrogène sulfureux (H₂S) et de mercaptans ainsi que de composés siliceux comme des siloxanes.

Dans un mode de réalisation préféré selon l'invention, le biogaz est issu des matières organiques contenues dans des déchets traités en ISDND ou CET ou CSDU.

L'étape d'acidification (étape a.) du procédé selon la présente invention est mise en œuvre avant l'étape d'atomisation du lixiviat ou du concentrat de lixiviat (étape b.) pour neutraliser les carbonates et transformer l'ammoniaque en sels d'ammonium. Cette transformation en sels d'ammonium évite que l'ammoniaque ne se retrouve dans la partie vapeur traitée à la sortie du dispositif de filtration.

De manière générale le traitement d'acidification consiste à :
- dans un premier temps, diminuer la teneur en carbonates et permettre ainsi de limiter l'encrassement des dispositifs de l'installation selon l'invention,
- dans un deuxième temps, transformer l'azote ammoniacal en un sel de sulfate d'ammonium (NH₄)₂SO₄ qui est retenu dans les poussières issues du dispositif de filtration.

Dans un mode de réalisation particulier de l'invention, l'acide ajouté dans la cuve d'acidification est choisi parmi l'acide phosphorique, l'acide nitrique et l'acide sulfurique. La concentration et la quantité d'acide apporté dans la cuve d'acidification dépendent de la nature du lixiviat ou du concentrat de lixiviat à traiter, et sont par exemple déterminées au moyen du logiciel PROSIM™.

Dans un mode de réalisation préféré de l'invention, le traitement en vue de la neutralisation est réalisé avec de l'acide sulfurique ajouté dans la cuve d'acidification.

Dans un mode de réalisation préféré de l'invention, le pH obtenu dans la cuve d'acidification suite à l'addition du lixiviat ou du concentrat de lixiviat, de l'acide choisi parmi l'acide phosphorique, l'acide nitrique et l'acide sulfurique, de préférence l'acide sulfurique, et le cas échéant de la composition anti-mousse est égal à 5.

Dans un mode de réalisation particulier de l'invention, une solution basique, de préférence une solution de soude (NaOH), plus préférentiellement une solution de NaOH 30%, peut être ajoutée dans la cuve d'acidification ou dans la cuve de tranquillisation afin d'ajuster ou neutraliser le pH à environ 7.

Les cuves d'acidification et de tranquillisation sont équipées d'un agitateur et leur volume est dimensionné selon les débits des pompes alimentant les dispositifs de l'installation selon l'invention.

Pour effectuer l'étape d'acidification (étape a.), le procédé selon la présente invention peut comprendre (i) une cuve d'acidification et une cuve de tranquillisation séparées, ou (ii) une seule cuve d'acidification, ou (iii) deux cuves concentriques constituées d'une cuve d'acidification et d'une cuve de tranquillisation. Lorsque le procédé comprend une seule cuve d'acidification, cette cuve sert à la fois à l'acidification et à la tranquillisation.

Dans un mode de réalisation préféré de l'invention, pour effectuer l'étape d'acidification (étape a.), le procédé selon la présente invention comprend une cuve d'acidification et une cuve de tranquillisation séparées.

L'acidification du lixiviat ou du concentrat de lixiviat nécessite un temps de contact entre le lixiviat ou le concentrat de lixiviat et l'acide suffisant pour permettre la neutralisation des carbonates et de l'ammoniaque. Ce temps de contact dépend notamment de la nature du lixiviat ou du concentrat de lixiviat à traiter, qui peut être déterminée par une pré-analyse, par exemple une pré-analyse par échantillonnage.

Les inventeurs ont réalisé plusieurs expériences afin de déterminer un temps de contact optimal permettant de traiter des lixiviats ou des concentrats de lixiviat plus ou moins chargés en constituants minéraux et organiques, c'est-à-dire des lixiviats ou des concentrats de lixiviats jeunes, intermédiaires ou âgés. Les inventeurs ont observé que plus le lixiviat ou le concentrat de lixiviat était chargé en constituants minéraux et organiques, plus le temps de contact devait être élevé.

L'ajout d'un acide au lixiviat ou au concentrat de lixiviat ne permet pas d'obtenir une acidification instantanée du mélange et une neutralisation immédiate des carbonates et de l'ammoniaque. La neutralisation des carbonates et de l'ammoniaque est indépendante du pH ou de la concentration de l'acide ajouté mais dépend de la nature du lixiviat ou du concentrat de lixiviat. Ainsi, même si le mélange a un pH compris dans l'intervalle de 5 à 6,5, il est nécessaire d'agiter le mélange pendant un temps de contact particulier, la réaction ne pouvant se produire instantanément dès le contact.

La détermination de ce temps de contact est donc un élément crucial pour obtenir une réaction d'acidification stable et non réversible au cours de laquelle les carbonates et l'ammoniaque sont neutralisés tout en maintenant le mélange à un pH constant, *i.e.* par l'obtention d'un « effet tampon ». Un temps de contact trop long aurait pour effet d'éliminer cet « effet tampon » et la réaction d'acidification deviendrait instable.

Après avoir réalisé plusieurs essais, les inventeurs ont déterminé ce temps de contact dans la cuve d'acidification et ont observé qu'un temps de contact compris dans l'intervalle de 2h à 4h permettait de façon optimisée de traiter des lixiviats ou des concentrats de lixiviats plus ou moins chargés en constituants minéraux et organiques.

Idéalement ce temps de contact est de 3h dans la cuve d'acidification.

Dans un mode de réalisation particulier de l'invention, lors de l'étape d'acidification (étape a.), un temps de contact compris dans l'intervalle de 2h à 4h, de préférence de 3h, permet de traiter un lixiviat ou un concentrat de lixiviat chargé en constituants minéraux et organiques, comprenant :
i) des matières organiques biodégradables (DBO₅) dont la teneur est comprise dans l'intervalle de 450 à 55 000 mg/l, de préférence de 540 à 52 000 mg/l ; et/ou
ii) des matières organiques oxydables (DCO) dont la teneur est comprise dans l'intervalle de 1000 et 160 000 mg/l, de préférence dans l'intervalle de 1200 et 148 000 mg/l ; et/ou
iii) des bicarbonates dont la teneur est comprise dans l'intervalle de 2500 et 30 000 mg/l, de préférence de 2800 à 26 500 mg/l.

Ledit lixiviat ou ledit concentrat de lixiviat peut en outre comprendre indépendamment les uns des autres:
iv) des chlorures dont la teneur est comprise dans l'intervalle de 500 et 10 500 mg/l, de préférence de 650 à 9400 mg/l ; et/ou
v) des sulfates dont la teneur est comprise dans l'intervalle de 15 et 600 mg/l, de préférence de 17 à 550 mg/l ; et/ou
vi) du calcium dont la teneur est comprise dans l'intervalle de 25 et 350 mg/l, de préférence de 29 à 320 mg/l ; et/ou
vii) du magnésium dont la teneur est comprise dans l'intervalle de 10 et 150 mg/l, de préférence de 12 à 105 mg/l ; et/ou
viii) du sodium dont la teneur est comprise dans l'intervalle de 300 et 4000 mg/l, de préférence de 350 à 3300 mg/l ; et/ou
ix) du potassium dont la teneur est comprise dans l'intervalle de 200 et 2500 mg/l, de préférence de 240 à 2020 mg/l ; et/ou
x) du phosphore dont la teneur est comprise dans l'intervalle de 2 et 70 mg/l, de préférence de de 3 et 57 mg/l.

Dans un mode de réalisation préféré de l'invention, lors de l'étape d'acidification (étape a.), un temps de contact compris dans l'intervalle de 2h à 4h, de préférence de 3h, permet de traiter un lixiviat ou un concentrat de lixiviat chargé en constituants minéraux et organiques, comprenant :
i) des matières organiques biodégradables (DBO₅) dont la teneur est comprise dans l'intervalle de 450 à 55 000 mg/l, de préférence de 540 à 52 000 mg/l ; et/ou
ii) des matières organiques oxydables (DCO) dont la teneur est comprise dans l'intervalle de 1000 et 160 000 mg/l, de préférence dans l'intervalle de 1200 et 148 000 mg/l.

Le procédé selon l'invention peut entraîner une formation de mousse qui peut conduire à des débordements.

Dans un mode de réalisation préféré de l'invention, à l'étape a., un dispositif ou une composition anti-mousse est ajoutée dans la cuve d'acidification. Une composition anti-mousse appropriée est choisie parmi celles classiquement utilisées pour ce type de réaction et disponibles sur le marché.

Dans un mode de réalisation préféré de l'invention, à l'étape a., on introduit le lixiviat ou le concentrat de lixiviat dans une cuve d'acidification dans laquelle sont ajoutés un acide puis une composition anti-mousse afin d'obtenir un mélange dont le pH est compris dans l'intervalle de 5 à 6,5, ledit mélange étant ensuite mis sous agitation pendant une durée de 2h à 4h, de préférence 3h, puis le pH est neutralisé (i) dans la cuve d'acidification ou (ii) après avoir transféré ledit mélange, dans une cuve de tranquillisation.

Après cette phase de pré-traitement acide (étape a.), une étape d'atomisation (évaporation par effet « flash » à haute température et séchage) est réalisée (étape b.).

Dans cette étape b. selon l'invention, le lixiviat ou le concentrat de lixiviat traité à l'issue de l'étape a. est pulvérisé sous forme de microgouttes dans des gaz de combustion chauds ayant une température égale ou supérieure à 900°C.

Dans un mode de réalisation particulier de l'invention, à cette étape b., la pulvérisation est effectuée à l'aide d'une canne de pulvérisation bi-fluide, par exemple assistée à l'air ou utilisant de l'air, en particulier de l'air comprimé. Cette canne de pulvérisation bi-fluide peut être choisie parmi celles classiquement utilisées pour ce type de réaction et disponibles sur le marché.

Selon l'invention, les gaz de combustion chauds utilisés à l'étape b. sont produits par un brûleur à refroidissement par air.

L'injection du lixiviat ou du concentrat de lixiviat au moyen de cette canne de pulvérisation bi-fluide favorise la création des microgouttes et améliore le contact, permettant un « contact flash » entre le lixiviat ou le concentrat de lixiviat à évaporer et les gaz de combustion chauds.

Dans un mode de réalisation particulier de l'invention, la taille des microgouttes, obtenues avant le contact avec les gaz de combustion chauds, est comprise dans l'intervalle de 50 à 110 microns.

Dans un mode de réalisation préféré de l'invention, la taille des microgouttes obtenues avant le contact avec les gaz de combustion chauds, est de 70 microns.

Le brûleur utilisé dans le dispositif d'atomisation est un brûleur de type « Isoflash » mais contrairement aux brûleurs Isoflash classiques à refroidissement par eau, celui-ci est un brûleur par refroidissement à air. Ce brûleur est un brûleur spécialement adapté à la combustion de gaz tel que décrit ci-après.

Les gaz de combustion perdent environ 800°C en quelques centimètres de trajet à la sortie du brûleur, la température de flamme étant voisine de 950°C. La phase liquide au contact des gaz s'échauffe donc de 100°C environ. Dans ce système, la température recherchée pour les gaz obtenus est de l'ordre de 130°C.

Dans un mode de réalisation préféré de l'invention, les gaz de combustion chauds utilisés à l'étape b. ont une température comprise dans l'intervalle de 900°C à 1200°C.

Dans un mode de réalisation préféré de l'invention, les gaz de combustion chauds utilisés à l'étape b. ont une température de 950°C.

Dans un mode de réalisation préféré de l'invention, l'ensemble des éléments du brûleur permet de brûler du biogaz, en particulier du biogaz des ISDND ou CET ou CSDU, plus particulièrement un biogaz contenant de 25% à 75% de méthane (CH₄).

Dans un mode de réalisation particulier de l'invention, la seule source d'énergie utilisée est du biogaz, en particulier du biogaz provenant des ISDND ou CET ou CSDU, participant ainsi à la réduction de l'effet de serre.

Dans un mode de réalisation préféré de l'invention, les gaz de combustion utilisés à l'étape b. sont du biogaz.

Les gaz de combustion chauds, en particulier du biogaz chaud, ainsi produits par le brûleur entrent dans l'enceinte délimitée par la paroi tronconique du dispositif d'atomisation en un écoulement conique concentrique pour réaliser un « contact flash » tel que défini ci-après, avec le lixiviat ou le concentrat de lixiviat préalablement traité à la sortie du brûleur.

Dans le procédé selon l'invention, l'effet tourbillon classiquement utilisé dans un système Isoflash et décrit dans le brevet EP0127519 est supprimé et remplacé par un dispositif formant un cône de chaleur parfaitement centré pour éviter une surpression interne. Cette disposition supprime les effets d'accumulation et permet au contraire une évacuation des vapeurs et poussières vers le bas du fût du dispositif d'atomisation.

Dans le contexte de l'invention, l'expression « *contact flash* » signifie que le lixiviat ou le concentrat de lixiviat est mis en contact pendant un temps très bref, de l'ordre de quelques millièmes de secondes avec les gaz de combustion chauds.

En l'espace d'un millième de seconde, une microgoutte formée par pulvérisation à l'aide d'une canne de pulvérisation bi-fluide, en particulier une microgoutte de 50 à 110 microns, de préférence de 70 microns, est pulvérisée pour entrer en contact avec les gaz de combustion chauds, en particulier du biogaz chaud; un choc par transfert d'énergie cinétique du gaz de combustion chaud, en particulier du biogaz chaud, vers les microgouttes se produit réduisant encore la taille de ces microgouttes, facilitant ainsi l'évaporation de l'eau par effet flash sans dégrader les constituants minéraux et organiques contenus dans le lixiviat ou le concentrat de lixiviat.

Cette mise en « contact flash » permet que les constituants minéraux et organiques contenus dans le lixiviat ou le concentrat de lixiviat ne soient pas dégradés puisque le lixiviat ou le concentrat de lixiviat est ainsi évaporé et non brûlé. Ces constituants minéraux et organiques évaporés sont obtenus sous forme de poussières qui peuvent être récupérées et utilisées suivant l'étape c. du procédé selon l'invention.

Par ailleurs le procédé selon l'invention permet de prédéfinir la quantité d'énergie nécessaire, et donc les volumes de gaz, en particulier de biogaz, nécessaires pour vaporiser une unité de volume de lixiviat ou de concentrat de lixiviat à traiter. A titre indicatif, l'évaporation d'1 m³ d'eau selon le procédé de l'invention requiert une quantité d'énergie de l'ordre de 1000 kW.

L'étape d'atomisation est réalisée dans un dispositif d'atomisation, comprenant un brûleur tel que défini ci-dessus et un fût dont le diamètre et la longueur ainsi que les volumes de gaz mis en jeu dépendent du débit de lixiviat ou de concentrat de lixiviat à traiter (étape b. du procédé selon l'invention).

Dans un mode de réalisation particulier de l'invention, le dispositif d'atomisation comporte un fût dont le diamètre est compris dans l'intervalle de 1 à 1,5 m et la hauteur est comprise dans l'intervalle de 6 à 10 m, ces dimensions dépendant également de la charge en constituants minéraux et organiques du lixiviat ou du concentrat de lixiviat à traiter. Afin d'obtenir une évaporation complète, plus le lixiviat ou le concentrat de lixiviat est chargé en constituants minéraux et organiques, plus le diamètre et la longueur du fût du dispositif d'atomisation sont grands.

Les procédés de nettoyage du fût du dispositif d'atomisation sont également adaptés en conséquence.

Suite à la mise en œuvre de ce procédé d'atomisation (étape b. du procédé selon l'invention), les résidus non gazeux ou les éléments non vaporisés présents sous forme liquide, solide et/ou pâteuse sont extraits par une conduite située dans la partie basse du dispositif d'atomisation pour être recyclés et les gaz comprenant des vapeurs d'eau, des poussières et des gaz de combustion sont dirigés vers un dispositif de filtration par une conduite située dans la partie basse du dispositif d'atomisation afin de réaliser l'étape c. du procédé selon l'invention.

Lors de l'étape c. selon l'invention, un décolmatage des filtres à l'air, par exemple à l'air comprimé, est réalisé afin de récupérer les poussières comprenant les constituants minéraux et organiques du lixiviat ou du concentrat de lixiviat.

A l'étape c., la filtration est effectuée dans un dispositif de filtration à une température comprise dans l'intervalle de 121°C à 140°C, de préférence d'environ 130°C. Cette température évite la condensation de la vapeur d'eau dans l'ensemble du procédé thermique et ainsi la formation de dépôts de poudre humide colmatante.

Dans un mode de réalisation préféré de l'invention, à l'étape c., la filtration est effectuée dans un dispositif de filtration à une température de 130°C.

Dans un mode de réalisation particulier de l'invention, à l'étape c., un décolmatage des filtres est effectué à l'air, par exemple à l'air comprimé.

La récupération de poussières se fait par la partie basse du dispositif de filtration au moyen d'un sas, par exemple d'un sas réalisé à l'aide de deux vannes à guillotines à pelle traversante. Afin de supprimer les risques d'auto-inflammation de la poudre par oxydation à l'air, le sas et un conteneur, par exemple de type « Big Bag », qui récupère la poudre sont mis sous atmosphère neutre par récupération d'une partie des gaz issus du dispositif de filtration. Les constituants minéraux et organiques ainsi obtenus sont présents sous forme de poussières, par exemple d'une poudre sèche à 99% qui peut le cas échéant être placée en enfouissement.

Dans un mode de réalisation particulier de l'invention, à l'étape c., les poussières récupérées sont stockées sous atmosphère neutre contrôlée par l'utilisation d'une partie des gaz issus du dispositif de filtration, l'autre partie des gaz issus du dispositif de filtration étant évacuée, par exemple dans l'atmosphère au moyen d'une cheminée ou en utilisant un dispositif d'abattement de panache.

Grâce à la récupération de ces poussières, le procédé selon l'invention permet notamment d'utiliser un lixiviat ou un concentrat de lixiviat ayant une charge en constituants minéraux et organiques comprenant de 0,1% à 30% en matière sèche, en particulier une charge élevée de l'ordre de 30% en matière sèche, tout en évitant l'encrassement des dispositifs de l'installation selon l'invention.

Les gaz en sortie du dispositif de filtration sont principalement constitués de vapeur d'eau dont la température est supérieure à 121°C. Afin de limiter la condensation, en particulier l'hiver, un abattement de panache peut être réalisé (étape d. du procédé selon l'invention). L'abattement de panache est effectué au moyen d'un dispositif d'abattement de panache en fin de procédé qui permet d'élever la température des rejets jusqu'à 550°C.

Ainsi, dans un mode de réalisation particulier de l'invention, le procédé ne comprend pas un dispositif d'abattement de panache, en particulier en été.

Dans un autre mode de réalisation particulier de l'invention, le procédé comprend un dispositif d'abattement de panache, en particulier durant l'hiver afin d'éviter la création de zones de neiges artificielles. En particulier, les gaz issus du dispositif de filtration sont transférés au moyen d'une cheminée d'extraction du dispositif de filtration vers l'entrée d'un dispositif d'abattement de panache, ces gaz restent ensuite pendant 0,3 seconde dans une chambre de combustion contenant des gaz de combustion chauds ayant une température comprise dans l'intervalle de 900°C à 1200°C selon la réglementation environnementale en vigueur, de préférence de 900°C, et produits par un brûleur, puis sont conduites dans un dispositif de mélange dans lequel le mélange constitué des gaz et des gaz de combustion chauds est amené à une température comprise dans l'intervalle de 450°C à 550°C avant d'être rejeté dans l'atmosphère sous forme de vapeurs sèches au moyen d'une cheminée.

Dans le contexte de l'invention, les termes « *vapeurs sèches* » font référence à des vapeurs dont la température est supérieure à 121°C.

L'apport d'énergie pour effectuer l'abattement de panache est assuré au moyen d'un gaz de combustion bien connu de l'homme du métier.

Dans un mode de réalisation préféré de l'invention, l'apport d'énergie est assuré par un apport de biogaz tel que défini précédemment.

Pour réaliser cet abattement de panache, les inventeurs ont développé un brûleur spécialement adapté au biogaz des ISDND ou CET ou CSDU, notamment en surmontant les difficultés liées aux variations (climatiques ou chimiques) de la composition du gaz de combustion, en particulier du biogaz.

Dans un mode de réalisation préféré de l'invention, le brûleur est capable de fonctionner avec du biogaz comprenant de 25 à 75% de méthane.

Dans un autre mode de réalisation préféré de l'invention, le brûleur contrôle la puissance du gaz brûlé de sorte que la température de la chambre de combustion est maintenue à 900°C quelque soit la composition du gaz de combustion, en particulier du biogaz.

Le dispositif d'abattement de panache selon l'invention a également été optimisé pour maintenir une température de 550°C au niveau de la sortie vers l'atmosphère quel que soit la composition du gaz de combustion, en particulier du biogaz, permettant ainsi d'obtenir des vapeurs sèches.

Toutes les étapes du procédé selon la présente invention respectent les réglementations environnementales en vigueur.

L'invention concerne également une installation telle que décrite à la revendication 8, qui comprend un dispositif d'atomisation particulier.

Dans le contexte de l'invention, le terme « *fluide* » fait référence à un liquide qui contient des constituants minéraux et organiques tels que des effluents industriels, de préférence un lixiviat ou un concentrat de lixiviat.

Le dispositif d'atomisation permet de vaporiser de façon efficace un débit important de fluide, en particulier de lixiviat ou de concentrat de lixiviat. Par ailleurs, le flux de gouttelettes généré par les moyens de pulvérisation circule au centre de la paroi tronconique du fût et est maintenu globalement à distance de ladite paroi par une partie du flux de gaz chaud.

Les dimensions du fût, en particulier la dimension axiale du fût, peuvent être déterminées en fonction de la vitesse des premier et second flux, de manière à ce que le temps de séjour des gouttelettes soit suffisant pour permettre une évaporation complète des gouttelettes.

De préférence, l'angle de la paroi tronconique et l'angle du cône du second flux par rapport à l'axe de la paroi tronconique sont sensiblement égaux, par exemple compris entre 20 et 40°, de préférence de l'ordre de 30°. L'angle du cône formé par le premier flux par rapport audit axe est inférieur à celui du second flux et est par exemple de l'ordre de 15°. On notera qu'un angle trop important de la paroi tronconique peut générer des vitesses de flux trop faibles et engendrer ainsi un collage de sels sur ladite paroi.

Les moyens de pulvérisation du brûleur peuvent comporter un canal central apte à être alimenté par une source d'air servant à la pulvérisation, un canal annulaire entourant le canal central, apte à être alimenté par le fluide à atomiser, et une buse apte à former des gouttelettes par pulvérisation du fluide à atomiser issu du canal central, à l'aide de l'air issu du canal annulaire.

Ces deux canaux et la buse peuvent former une canne de pulvérisation qui est amovible par rapport au reste du dispositif d'atomisation.

Les moyens de génération du flux de gaz chaud du brûleur peuvent comporter un premier canal apte à être alimenté par de l'air, un deuxième canal annulaire entourant le premier canal et apte à être alimenté par du gaz de combustion, le premier canal comportant des trous débouchant dans le second canal, de manière à mélanger de l'air issu du premier canal au gaz de combustion circulant dans le deuxième canal, un troisième canal entourant le deuxième canal et apte à être alimenté par de l'air, les parois radialement interne et externe du deuxième canal étant aptes à être refroidies par l'air circulant dans le premier canal et dans le troisième canal.

Une telle structure permet de refroidir efficacement le deuxième canal, qui forme une chambre de combustion.

L'invention concerne une installation de traitement d'un lixiviat ou d'un concentrât de lixiviat, par exemple d'un lixiviat ou d'un concentrât de lixiviat chargé en constituants minéraux et organiques, la charge en constituants minéraux et organiques comprenant de 0,1% à 30% en matière sèche, caractérisé en ce qu'elle comporte :
- une cuve d'acidification et optionnellement une cuve de tranquillisation,
- un dispositif d'atomisation du type précité,
- un dispositif de filtration relié au fût du dispositif d'atomisation et apte à filtrer les gaz issus dudit fût.

Les gaz issus du dispositif de filtration peuvent être rejetés directement dans l'atmosphère.

En variante, l'installation peut comporter un dispositif d'abattement de panache comportant une chambre de combustion, un brûleur apte à générer des gaz chauds dans la chambre de combustion, un canal annulaire entourant la chambre de combustion, et des moyens aptes à faire circuler les gaz issus du dispositif de filtration dans le canal annulaire, lesdits gaz étant aptes à échanger de la chaleur avec la chambre de combustion.

De cette manière, les gaz issus du dispositif de filtration sont chauffés à l'aide du dispositif d'abattement de panache avant d'être expulsés dans l'atmosphère sous forme de vapeurs sèches. On évite ainsi la formation d'un panache de fumée blanche.

Dans ce cas, le dispositif d'abattement de panache peut comporter une cheminée dans laquelle débouchent la chambre de combustion et le canal annulaire, la chambre de combustion étant équipée d'un dispositif de mélange apte à être traversé par les gaz issus de la chambre de combustion, de manière à former un tourbillon lors du passage desdits gaz au travers du dispositif de mélange.

La formation d'un tourbillon permet de faciliter le mélange des gaz chauds issu de la chambre de combustion et des gaz issus du dispositif de filtration, circulant dans le canal annulaire entourant la chambre de combustion.

Le dispositif de mélange peut présenter une forme conique s'étendant suivant l'axe de la chambre de combustion et comportant des ouvertures régulièrement réparties sur la circonférence.

Le dispositif de filtration peut comporter une enceinte dans laquelle sont montés des filtres, et des moyens de recirculation des gaz contenus dans l'enceinte, lesdits moyens de recirculation étant équipés de moyens de chauffage des gaz.

De tels moyens sont par exemple utilisés pour augmenter la température au sein de l'enceinte du dispositif de filtration, par exemple lors d'un mode de démarrage ou de préchauffage du dispositif de filtration.

Le dispositif d'atomisation peut comporter une cheminée et des moyens aptes à diriger les gaz issus du dispositif d'atomisation vers la cheminée, dans un mode de mise en service du dispositif d'atomisation, et aptes à diriger les gaz issus du dispositif d'atomisation vers le dispositif de filtration, dans un mode de fonctionnement normal de l'installation.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la **figure 1** est une vue schématique illustrant une première partie d'une installation de traitement selon l'invention,
- la **figure 2** est une vue schématique illustrant une seconde partie de l'installation de traitement,
- la **figure 3** est une vue schématique d'un dispositif de filtration équipant ladite seconde partie,
- la **figure 4** est une vue schématique d'un dispositif d'atomisation équipant ladite seconde partie,
- la **figure 5** est une vue schématique d'un dispositif d'abattement de panache équipant ladite seconde partie,
- la **figure 6** est une vue en perspective du dispositif d'abattement de panache,
- la **figure 7** est une vue en perspective d'un dispositif de mélange appartenant au dispositif d'abattement de panache,
- les **figures 8** **et** **9** représentent respectivement la seconde partie de l'installation et le dispositif de filtration, lors d'une étape de préchauffage,
- les **figures 10** **et** **11** représentent respectivement la seconde partie de l'installation et le dispositif d'atomisation, lors d'une étape de mise en service du dispositif d'atomisation,
- les figures **12** **et** **13** représentent respectivement la seconde partie de l'installation et le dispositif d'abattement de panache, lors d'une étape de mise en service du dispositif d'abattement de panache,
- la **figure 14** représente schématiquement la seconde partie de l'installation lors d'une étape de fonctionnement normal de ladite seconde partie,
- la **figure 15** représente schématiquement une étape de lavage du dispositif d'atomisation.

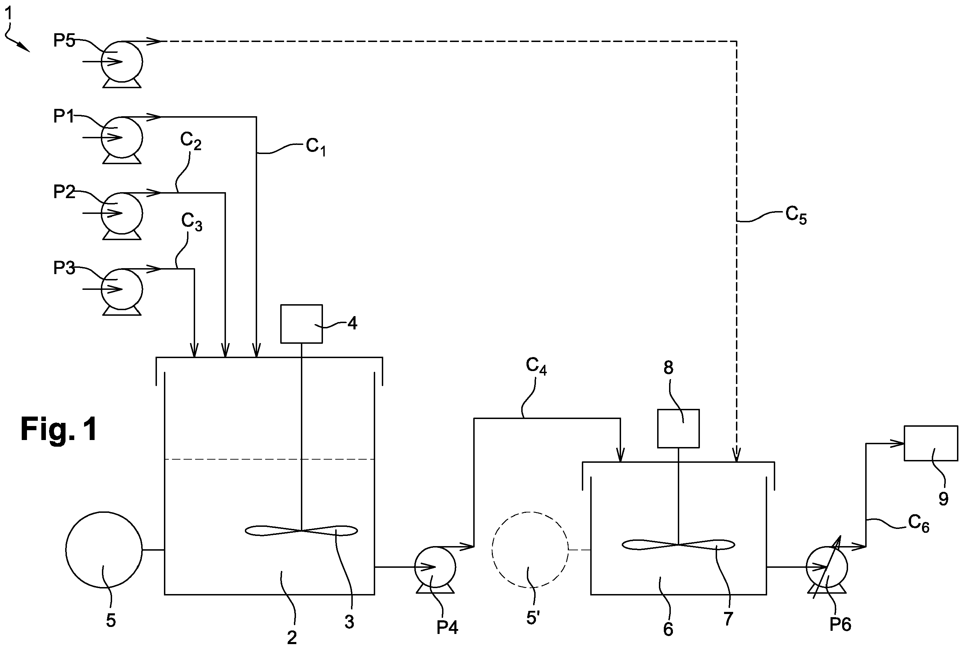

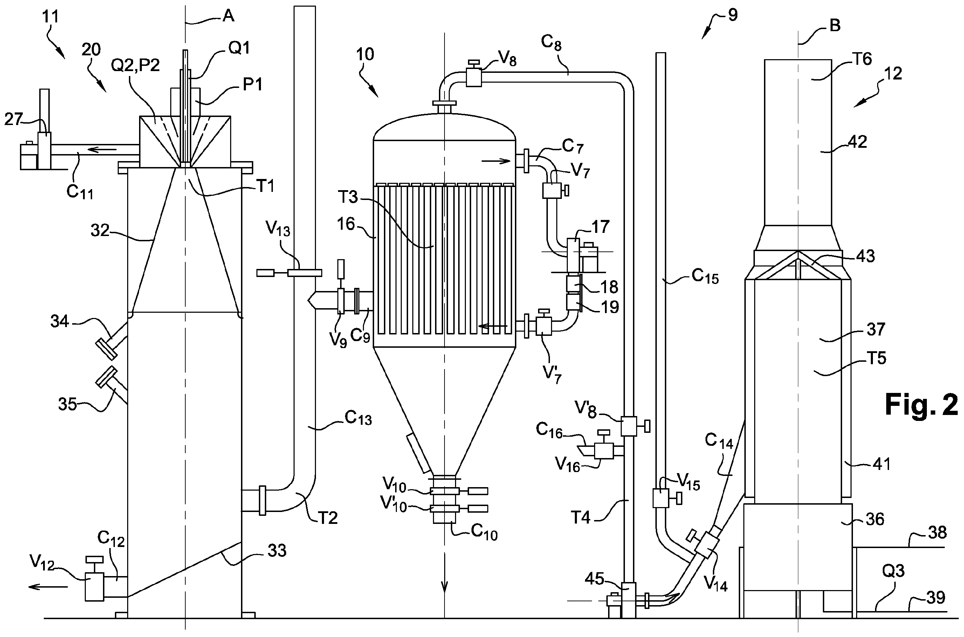

Les **figures 1** **et** **2** représentent respectivement une première partie et une seconde partie d'une installation de traitement d'un lixiviat ou d'un concentrat de lixiviat chargé en constituants minéraux et organiques, selon une forme de réalisation de l'invention.

La première partie 1, visible à la figure 1, comporte une cuve d'acidification 2 apte à être alimentée par :
- une conduite C1 d'amenée d'un lixiviat ou d'un concentrat de lixiviat, équipée d'une pompe P1,
- une conduite C2 d'amenée d'un acide tel que défini précédemment, tel par exemple que de l'acide sulfurique, équipée d'une pompe P2,
- une conduite C3 d'amenée d'un produit apte à limiter la formation de mousse dans la cuve d'acidification, ladite conduite C3 étant équipée d'une pompe P3.

La cuve 2 est équipée de moyens d'agitation 3 actionnés par un moteur 4, et de moyens 5 de contrôle du pH au sein de la cuve 2, aptes à ajuster la composition de la cuve de façon à maintenir par exemple un pH compris entre 5 et 6,5, de préférence 5, par exemple par contrôle des pompes P1, P2, P3.

La cuve d'acidification 2 est reliée à une cuve de tranquillisation 6 par l'intermédiaire d'une conduite C4 équipée d'une pompe P4.

La cuve de tranquillisation 6 est également apte à être alimentée par une conduite C5 d'amenée d'une solution basique, de préférence une solution de soude (NaOH), plus préférentiellement une solution de NaOH 30%, équipée d'une pompe P5.

La cuve de tranquillisation 6 est équipée de moyens d'agitation 7 actionnés par un moteur 8, et de moyens 5' de contrôle du pH au sein de la cuve 2, aptes à ajuster la composition de la cuve 6 de façon à maintenir par exemple un pH d'environ 7, par exemple par contrôle de la pompe P5.

La cuve de tranquillisation 6 est apte à alimenter la seconde partie 9 de l'installation, au travers d'une conduite C5 équipée d'une pompe P5.

En fonctionnement, le lixiviat ou le concentrat de lixiviat, l'acide et le produit anti-mousse sont amenés dans la cuve 2 au travers des canalisations C1 à C3, de façon à former un mélange dont le pH est compris entre 5 et 6,5, de préférence 5, ledit mélange étant ensuite mis sous agitation à l'aide des moyens 3 pendant une durée comprise entre 2 heures et 4 heures, préférentiellement de l'ordre de 3 heures.

Ce mélange est ensuite transféré via la conduite C4 et la pompe P4 dans la cuve de tranquillisation 6, où une solution basique telle que définie précédemment est ajoutée au mélange par l'intermédiaire de la conduite C5 et de la pompe P5, de façon à neutraliser le pH, c'est-à-dire de façon à obtenir un mélange dont le pH est d'environ 7. Durant cette étape de neutralisation ou de tranquillisation, le mélange est mis sous agitation à l'aide des moyens 7.

Une fois ce mélange neutralisé, celui-ci peut être amené à la seconde partie 9 de l'installation, par l'intermédiaire de la conduite C6 et de la pompe P6.

La seconde partie 9 de l'installation est représentée aux figures 2 à 7 et comporte notamment un dispositif de filtration 10, un dispositif d'atomisation 11, et un dispositif d'abattement de panache 12.

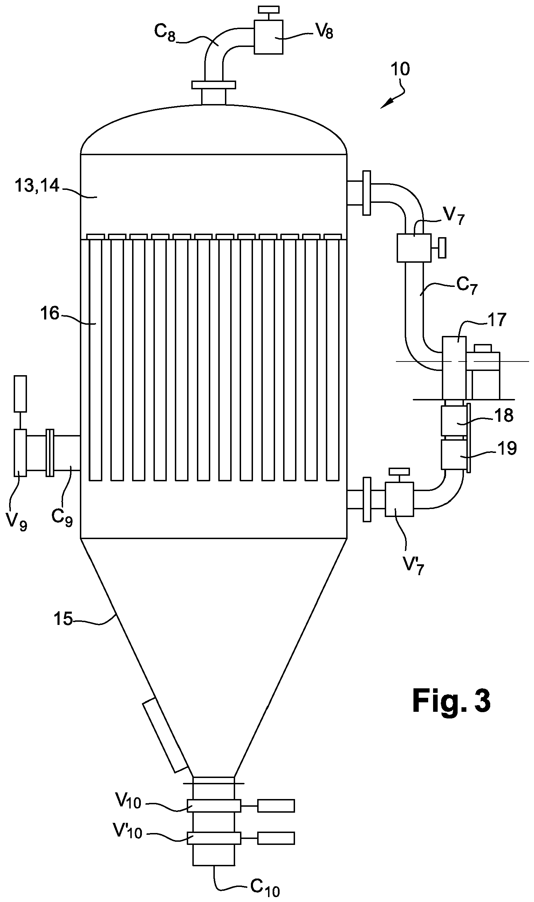

Comme cela est mieux visible à la figure 3, le dispositif de filtration 10 comporte une enceinte 13 comprenant une partie haute 14 globalement cylindrique et une partie basse 15 tronconique. La partie haute 13 est équipée de filtres 16 se présentant sous la forme de manches, aptes à filtrer des particules et orientés verticalement.

Le dispositif de filtration 10 comporte en outre une conduite de recyclage C7 débouchant de part et d'autre des filtres à manche 16, respectivement au-dessus et sous lesdits filtres 16. La conduite de recyclage C7 comporte successivement, de son extrémité supérieure vers son extrémité inférieure, une vanne V7, un ventilateur 17, au moins une résistance électrique apte à chauffer le fluide circulant au travers de la conduite C7, par exemple deux résistances élastiques 18, 19 agencées en série, et une vanne V'7.

L'extrémité supérieure de la partie haute 14 comporte une conduite C8 équipée d'une vanne V8. Une conduite C9 débouche en outre dans la partie haute 14, sous ou au niveau de l'extrémité inférieure des filtres 16, ladite conduite C9 étant équipée d'une vanne V9.

Une conduite C10 débouche au niveau de l'extrémité inférieure de la partie basse 15, ladite conduite C10 étant équipée de deux vannes V10, V'10, agencées en série de façon à former un sas.

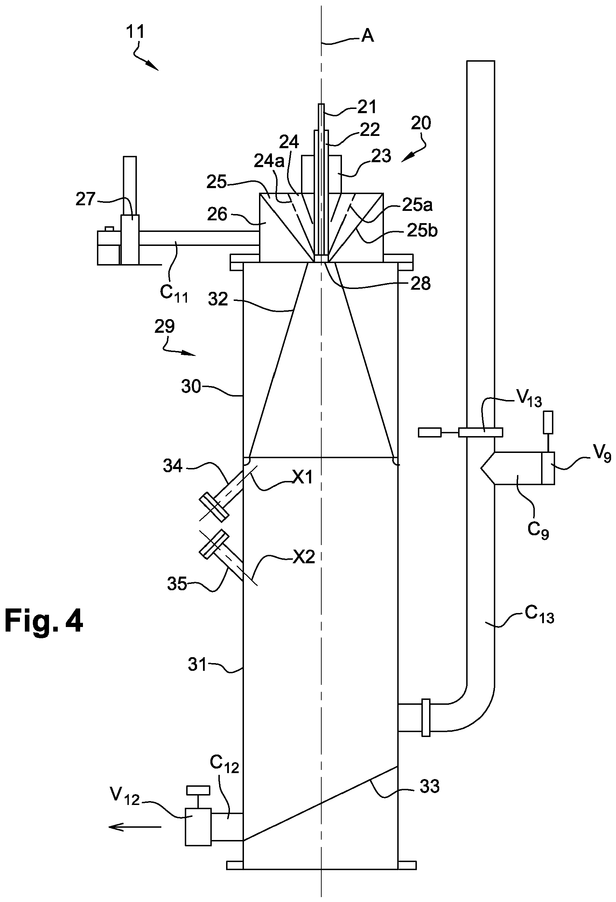

Comme cela est mieux visible à la figure 4, le dispositif d'atomisation 11 comporte un brûleur 20, de type Isoflash™, comportant plusieurs canaux de circulation concentriques.

En particulier le brûleur 20 comporte, radialement de l'intérieur vers l'extérieur selon l'axe A du brûleur 20:
- un canal central 21 apte à être alimenté par une source d'air servant à la pulvérisation,
- un canal annulaire 22 entourant le canal central 21, apte à être alimenté par le mélange ou le lixiviat issu de la conduite C6,
- un canal annulaire 23 entourant le canal 22, apte à être alimenté par de l'air servant à la combustion,
- un canal annulaire 24 entourant le canal 23, les canaux 23 et 24 étant reliées au niveau de leur partie inférieure de façon à former un seul et même canal en forme de chicane,
- un canal annulaire 25 entourant le canal 24 et apte à être alimenté par du gaz servant à la combustion, par exemple du biogaz, la partie supérieure du canal 24 comportant des trous 24a débouchant dans la partie supérieure du canal 25 de manière à mélanger de l'air de combustion issu du canal 24 au gaz de combustion circulant dans le canal 25,
- un canal annulaire 26 entourant le canal 25, apte à être alimenté par de l'air servant au refroidissement.

L'air de refroidissement circulant au travers du canal annulaire 26 est rejeté par une conduite C11 équipée d'un ventilateur 27 permettant d'aspirer l'air de refroidissement.

Le canal 25 contenant le mélange d'air de combustion et de gaz de combustion est ainsi apte à former une chambre de combustion dont les parois interne 25a et externe 25b peuvent être refroidies respectivement par l'air circulant dans le canal 24 et par l'air circulant dans le canal 26. Par ailleurs, l'air circulant dans le canal 23 permet de refroidir la canne d'injection 21,22.

Le canal central 21 et le canal 22 forment une canne de pulvérisation qui est amovible par rapport au reste du brûleur 11. L'extrémité inférieure de la canne comporte une buse permettant à l'air circulant dans le canal 21 de pulvériser le mélange ou le lixiviat issu du canal 22, de façon à former un mélange d'air et de fines gouttelettes de mélange ou lixiviat dans une zone de combustion 28 située directement sous la canne, le canal 25 débouchant au niveau de la zone de combustion 28. Les gouttelettes ont par exemple une taille comprise entre 50 et 110 microns, de préférence de l'ordre de 70 microns.

Le dispositif d'atomisation 11 comporte en outre un fût 29 de forme extérieure sensiblement cylindrique et d'axe A, située sous le brûleur 20. Le fût 29 comporte une partie haute 30, sur laquelle est fixé le brûleur 20, et une partie basse 31.

La partie haute 30 comporte une paroi interne tronconique 32 s'évasant à l'opposé du brûleur 20. La paroi tronconique 32 est réalisée en matériau réfractaire, par exemple en acier réfractaire. L'angle de la paroi tronconique 32 par rapport à l'axe A est compris entre 20 et 40°, par exemple de l'ordre de 30°.

L'extrémité supérieure de la paroi tronconique 32, c'est-à-dire l'extrémité dont le diamètre est le plus faible, est située en regard de la zone de combustion 28. Plus particulièrement, le diamètre de cette extrémité est légèrement supérieur au diamètre de la zone de combustion 28 et au diamètre du débouché du canal 25.

La zone de combustion 28 et le canal 25 débouchent donc intégralement dans le volume interne de la paroi tronconique 32.

L'extrémité inférieure de la paroi tronconique 32 est prolongée vers le bas par une paroi cylindrique formée par la partie basse 31 du fût 29. L'extrémité inférieure de ladite partie basse 31 comporte un fond 33 incliné par rapport au plan radial et par rapport à l'axe A. Le fond 33 est par exemple incliné d'un angle compris entre 20 et 50° par rapport au plan radial, de préférence de l'ordre de 30°.

Une conduite de vidange C12 débouche dans l'enceinte du fût 29 en regard de l'extrémité basse du fond incliné 33, ladite conduite C12 étant équipée d'une vanne V12. Le fût 29 peut également comporter une trappe de visite ou d'accès (non représentée) dans la partie basse 31 du fût 29. Une conduite ou cheminée d'évacuation C13 débouche au niveau de la partie basse 31 du fût 29, ladite conduite C13 étant équipée d'une vanne V13. La conduite C9 est reliée à la conduite C13, dans une zone située entre la vanne V13 et le débouché de la conduite C13 dans la partie basse 31 du fût 29.

Le fût 29 comporte enfin des ouvertures d'accès 34, 35 permettant l'introduction d'au moins une canne de lavage selon des directions X1, X2 obliques par rapport au plan radial et à l'axe A, par exemple selon deux directions X1, X2 opposées formant des angles de 45° par rapport au plan radial et à l'axe A.

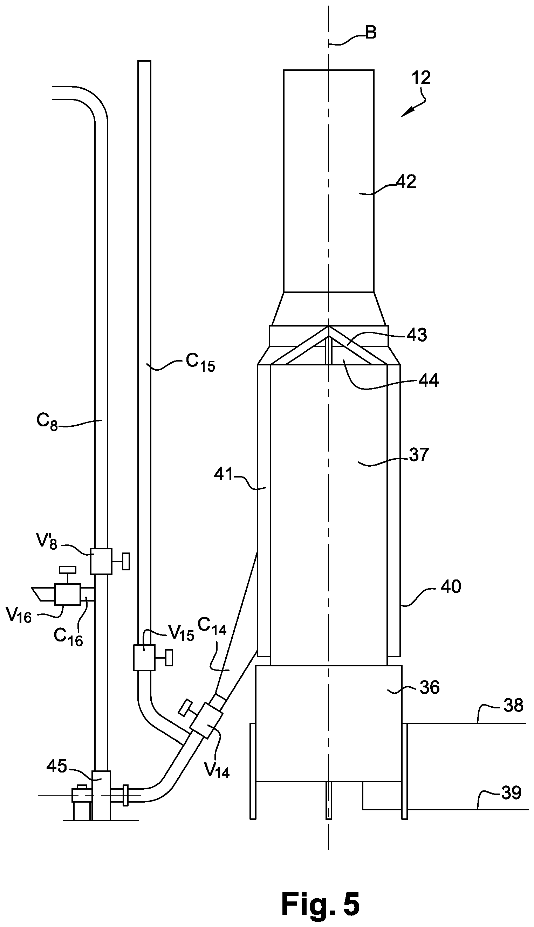

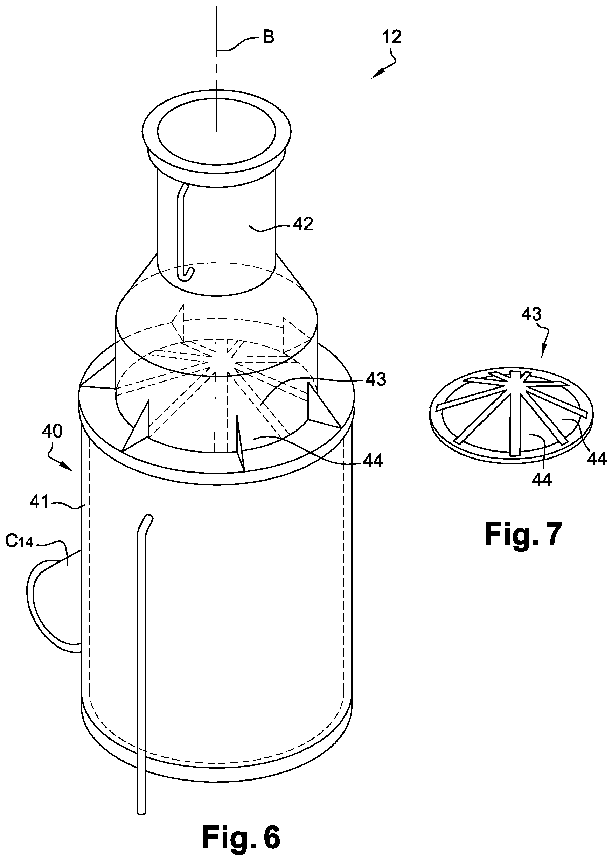

Comme cela est mieux visible aux figures 5 et 6, le dispositif d'abattement de panache 12 comporte un brûleur 36 surmonté d'une chambre de combustion 37 s'étendant suivant un axe B. Le brûleur 36 comporte une entrée 38 permettant l'arrivée d'air de combustion et une entrée 39 permettant l'arrivée d'un gaz de combustion, tel par exemple que du biogaz. La chambre de combustion 37 est entourée d'une paroi annulaire 40 délimitant un volume annulaire 41. La chambre de combustion 37 et le volume annulaire 41 débouchent vers le haut dans une cheminée 42 d'axe B.

L'extrémité supérieure de la chambre de combustion 37 est surmontée d'un dispositif de mélange 43 dont la structure est illustrée à la figure 6. Le dispositif de mélange 43 présente une forme conique d'axe B et est ajouré. En particulier, le dispositif de mélange conique 43 comporte des ouvertures 44 régulièrement réparties sur la circonférence, par exemple huit ouvertures 44 globalement triangulaires en vue de dessus.

Une conduite C14 débouche dans le volume interne 41 délimitée par la paroi 40, ladite conduite C14 étant équipée d'une vanne V14 et étant reliée à la conduite C8 issu du dispositif de filtration. Plus particulièrement, les conduites C8 et C14 comportent successivement, depuis le dispositif de filtration jusqu'au dispositif d'abattement de panache, la vanne V8, une vanne V'8, un ventilateur 45 et la vanne V14. Une cheminée C15 est reliée à la conduite C14, en un point situé entre le ventilateur 45 et la vanne V14, ladite cheminée C15 étant équipée d'une vanne V15. Une conduite d'extraction C16 est reliée à la conduite C8, en un point située entre la vanne V'8 et le ventilateur 45, ladite conduite C8 étant équipée d'une vanne V16.

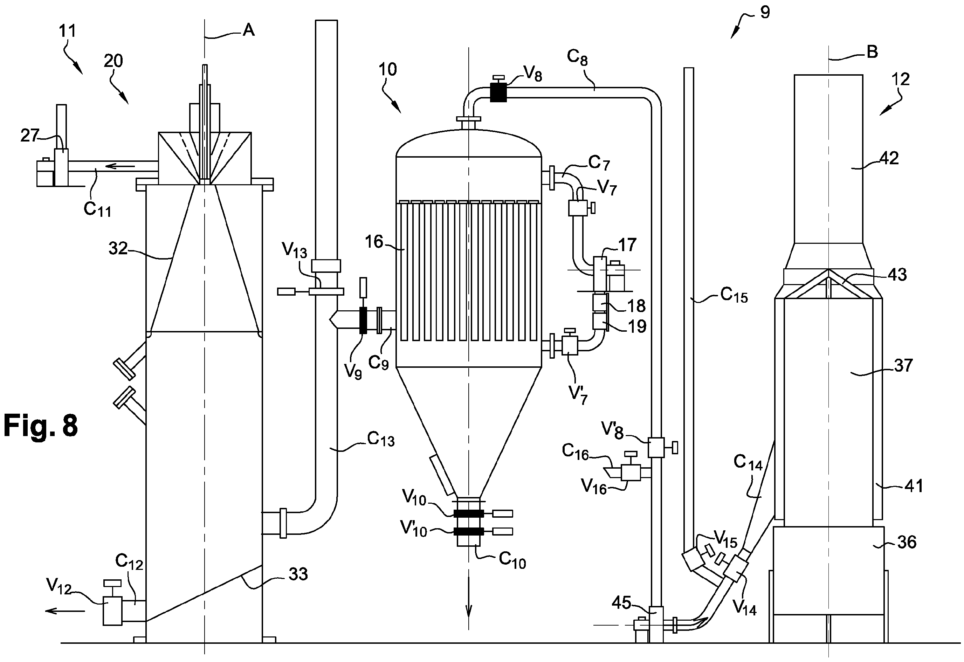

Le fonctionnement de la seconde partie 9 de l'installation va maintenant être décrit en référence aux figures 8 à 14.

Lors du démarrage de l'installation, il convient tout d'abord de préchauffer le dispositif de filtration 10, de mettre en service le dispositif d'atomisation 11, et de mettre en service le dispositif d'abattement de panache 12 avant de pouvoir faire fonctionner normalement la seconde partie 9 de l'installation.

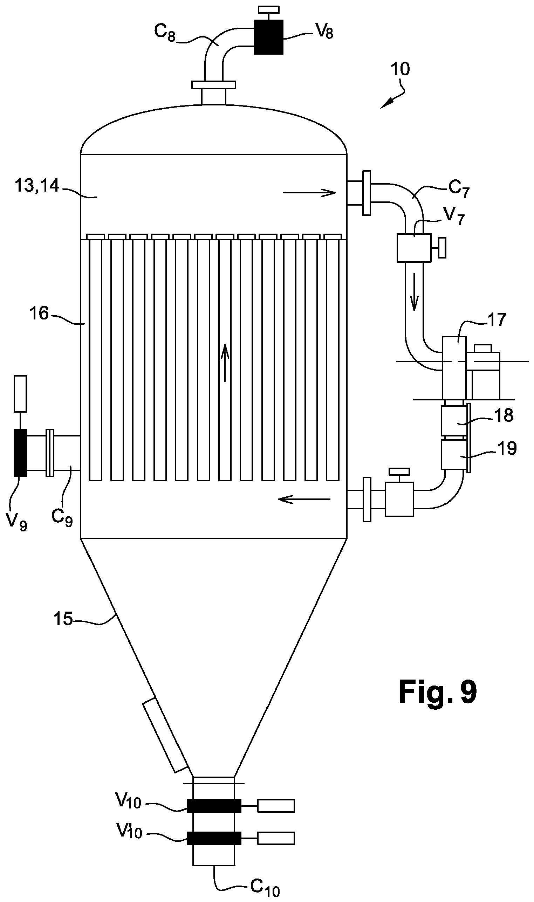

Les figures 8 et 9 illustrent en particulier l'étape ou le mode de préchauffage du dispositif de filtration 10.

Dans ce mode de fonctionnement, les vannes V8, V9, V10 et V'10 sont fermées de façon à isoler le dispositif de filtration du reste de la seconde partie 9 de l'installation. Les vannes V7 et V'7 sont ouvertes. On notera que, sur les figures, les vannes fermées sont représentées par des blocs noirs et les vannes ouvertes sont représentées par des blocs blancs. Par ailleurs, le ventilateur 17 et les résistances 18, 19 sont démarrés. Ainsi, dans le mode de fonctionnement, l'air circule au travers de la conduite C7, est chauffé à l'aide des résistances 18, 19, débouche dans l'enceinte 13, traverse les filtres 16 du bas vers le haut puis pénètre à nouveau dans la conduite C7. L'air, qui circule ainsi en circuit fermé, est chauffé progressivement jusqu'à atteindre une température de consigne comprise dans l'intervalle de 90°C à 105°C par exemple, de préférence dans l'intervalle de 90°C à 98°C. Cette température peut être mesurée à l'aide d'un capteur.

Une température élevée à l'intérieur de l'enceinte du dispositif de filtration 10 permet d'éviter la formation de condensation de la vapeur d'eau et ainsi le dépôt de poussière humide sur les filtres 16, un tel dépôt risquant de provoquer un colmatage des filtres 16.

Il est à noter que le dispositif de filtration 10 permet un décolmatage des filtres 16 par circulation d'air, par exemple d'air comprimé, dans le sens inverse, c'est-à-dire par circulation d'air du haut vers le bas de l'enceinte 13 et au travers des filtres. Les poussières retombent alors dans le fond de la paroi tronconique 15 et peuvent être évacuées par ouverture du sas formé par les vannes V10, V'10 au travers de la conduite C10.

Dans un tel mode, le dispositif d'atomisation 11 et le dispositif d'abattement de panache 12 peuvent être à l'arrêt.

Une fois que la température de l'air a atteint la température de consigne, le dispositif d'atomisation 11 peut alors être mis en service. En variante, la mise en service du dispositif d'atomisation 11 peut intervenir avant que ladite température de consigne soit atteinte.

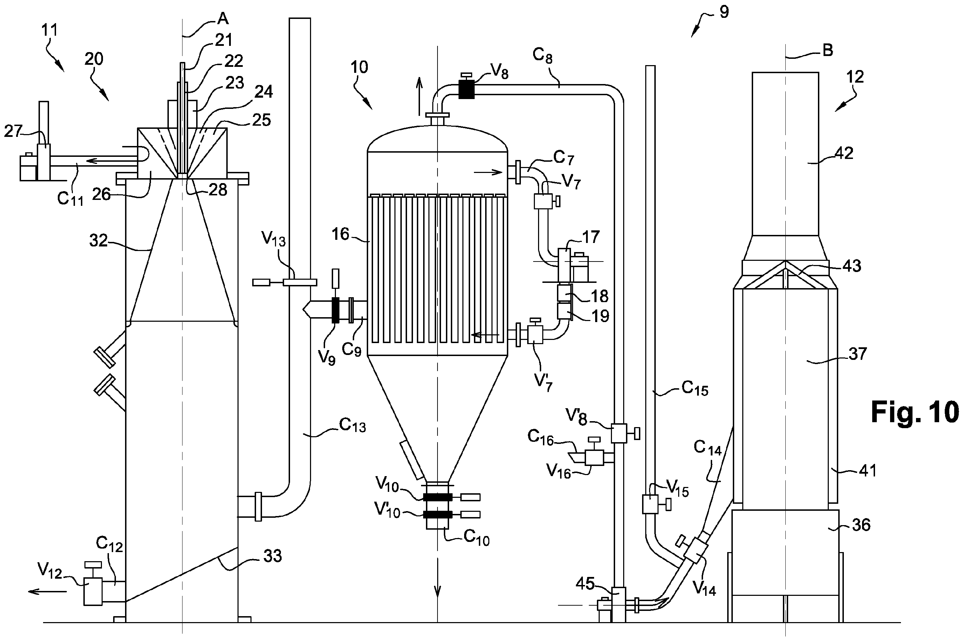

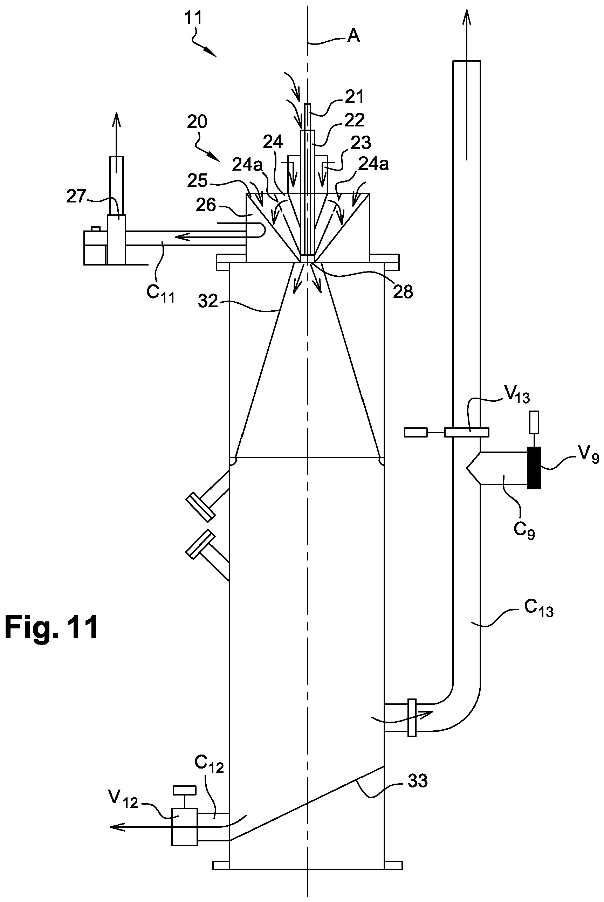

Un tel mode de mise en service du dispositif d'atomisation 11 est illustré aux figures 10 et 11. Dans un tel mode, les vannes V8, V9, V10, V'10 sont fermées et les vannes V7, V'7, V12 et V13 sont ouvertes. Par ailleurs, les ventilateurs 17, 27 et les résistances 18, 19 sont démarrés.

Dans un tel mode, le dispositif de filtration 10 est isolé et préchauffé, comme décrit précédemment en référence aux figures 8 et 9. Parallèlement de l'air de pulvérisation est amené dans le canal 21, de l'eau est amenée dans le canal 22, de l'air de combustion est amené dans le canal 23, du gaz de combustion est amené dans le canal 25 et de l'air de refroidissement est amené dans le canal 26.

L'air amené dans le canal 23 pénètre dans le canal 24 puis dans le canal 25 au travers des orifices 24a, où il est mélangé au gaz de combustion afin de former un mélange qui est brulé dans le canal ou la chambre 25, avant de déboucher dans la zone de combustion 28. Parallèlement, l'eau issue du canal 22 est pulvérisée à l'aide de la buse et de l'air issu du canal 21, les gouttelettes d'eau étant mises en contact avec les gaz de combustion chauds issus du canal 25, dans la zone de combustion 28 puis ensuite dans l'enceinte délimitée par la paroi tronconique 32. Les gouttelettes sont ainsi vaporisées par effet dit « flash ».

Plus particulièrement, les gouttelettes sont pulvérisées suivant un cône de l'ordre de 15° par exemple et les gaz chauds issus du canal 25 sont éjectés suivant un cône de l'ordre de 30°. Ainsi, le flux de gouttelettes circule au centre de la paroi tronconique 32 et est maintenu globalement à distance de la paroi 32 par une partie du flux de gaz chaud issus du canal 25.

Le flux de gaz obtenu par mélange des gouttelettes et des gaz de combustion et vaporisation desdites gouttelettes est ensuite évacué dans l'atmosphère par l'intermédiaire de la cheminée C13. Les gouttelettes non vaporisées lors de la phase de démarrage ou de mise en service du dispositif d'atomisation, du fait notamment de la température trop faible dans le fût 29, peuvent être dirigée par le fond 33 vers la conduite d'évacuation C12, la vanne V12 étant ouverte.

Cette étape de mise en service du dispositif d'atomisation 11 peut être considérée comme terminée lorsque les gaz circulant dans la cheminée C13 atteignent une température de consigne, par exemple une température comprise dans l'intervalle de 121°C à 140°C, de préférence de l'ordre de 130°C, en sortie de la cheminée C13. Un capteur de température peut être prévu à cet effet. En variante, l'étape de mise en service du dispositif d'atomisation 11 peut être considérée comme terminée lorsque le débit de liquide s'écoulant par la conduite C12 est nul ou inférieure à un débit déterminé.

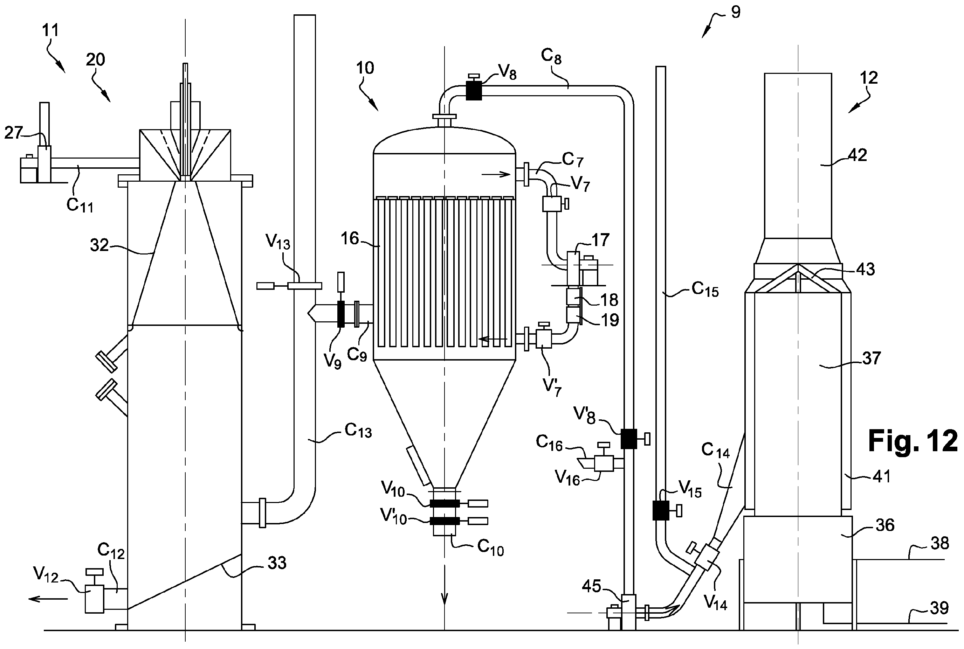

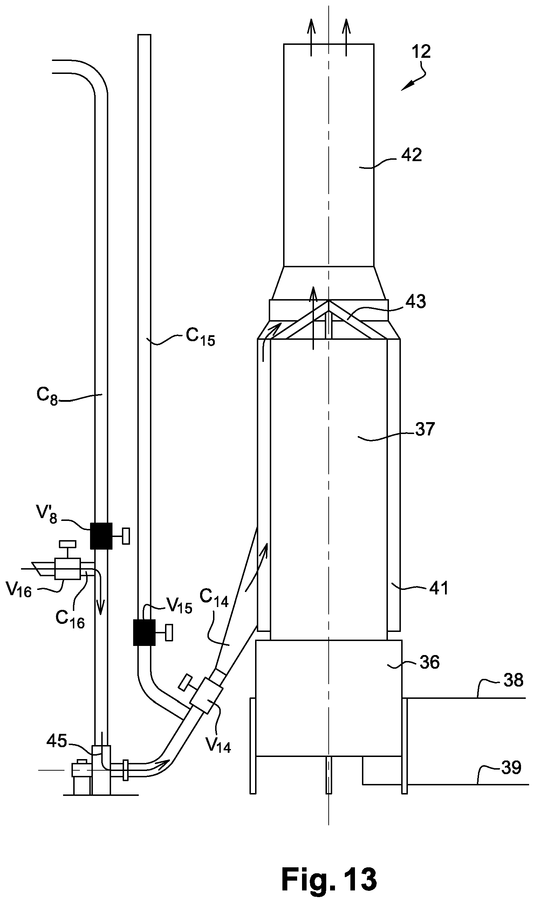

Les figures 12 et 13 illustrent l'étape ou le mode de mise en service du dispositif d'abattement de panache 12. On notera qu'une telle étape peut être réalisée indépendamment de l'étape de préchauffage du dispositif de filtration 10 ou de mise en service du dispositif d'atomisation 11. En particulier, il n'est pas nécessaire d'attendre que les gaz circulant dans la cheminée C13 atteignent la température de consigne correspondante.

Lors d'un tel mode de mise en service du dispositif d'abattement de panache 12, les vannes V'8 et V15 sont fermées et les vannes V14 et V16 sont ouvertes. Le ventilateur 45 et le brûleur 36 sont démarrés. Afin d'assurer le fonctionnement du brûleur 36, celui-ci est alimenté en air de combustion au niveau de l'entrée 38 et par du gaz de combustion au niveau de l'entrée 39. L'air et le gaz de combustion sont mélangés et brûlés dans la chambre de combustion 37, à une température comprise dans l'intervalle de 900°C à 1200°C, de préférence de l'ordre de 900°C pendant une durée d'au moins 0,3 s.

Parallèlement, de l'air extérieur est amené dans le volume annulaire 41 par l'intermédiaire de la vanne V16, du ventilateur 45, de la vanne 14 et des conduites associées. Cet air refroidit la paroi de la chambre de combustion 37 et est ainsi préchauffé avant d'être mélangé aux gaz de combustion issus de la chambre de combustion 37. Le dispositif de mélange 43 a pour effet, lorsqu'il est traversé par les gaz de combustion, de perturber l'écoulement desdits gaz de combustion afin qu'ils forment un tourbillon ou des turbulences de façon à mieux se mélanger à l'air issu du canal annulaire 41.

Cette étape de mise en service du dispositif d'abattement de panache peut être considérée comme terminée lorsque les gaz circulant dans la cheminée 42 atteignent une température de consigne, par exemple une température de l'ordre de 450 à 550°C en sortie de la cheminée. Un capteur de température peut être prévu à cet effet.

Une telle température permet d'éviter la présence d'un panache de fumée blanche dans l'air extérieur.

Dans une première partie d'une installation de traitement selon l'invention, un prétraitement par acidification, de préférence par acidification à l'acide sulfurique, est réalisé sur le lixiviat ou le concentrat de lixiviat à traiter afin de transformer l'ammoniaque en sels d'ammonium et neutraliser tout ou partie des carbonates (**Figure 1**).

A titre d'exemple, le **tableau 1** suivant indique la quantité de réactifs consommés à titre indicatif en fonction de la qualité du lixiviat ou du concentrat de lixiviat à traiter. Les consommations dépendent notamment de la composition du lixiviat ou du concentrat de lixiviat.

**Tableau 1**

| **Qualité du lixiviat** | | **Réactifs consommés à titre indicatif** | |
|---|---|---|---|
| **Débit de lixiviat** | 1 m³/h | **H₂SO₄ 96%** | 2 l/m³ |
| **N-NH₄** | 750 mg/l | **Antimousse** | 0,15 l/m³ |
| **pH supposé** | 8 | **NaOH 30%** | 1 l/m³ |

Les inventeurs ont déterminé la plage de temps de contact optimale nécessaire à l'acidification de lixiviats ou de concentrats de lixiviat de nature différente. Le **tableau 2** suivant présente des exemples de lixiviats ou de concentrats de lixiviat plus ou moins chargés en constituants minéraux et organiques dans lesquels les carbonates et l'ammoniaque ont été neutralisés après un temps de contact optimal dans la cuve d'acidification 2 compris dans l'intervalle de 2h à 4h, de préférence est de 3h.

**Tableau 2**

| | | Valeurs des analyses des lixiviats utilisés pour la vérification en laboratoire des temps de séjour en acidification | | | | | | |
|---|---|---|---|---|---|---|---|---|
| **Analyse** | **Unités** | **Lixiviat 1** | **Lixiviat 2** | **Lixiviat 3** | **Lixiviat 4** | **Lixiviat 5** | **Lixiviat 6** | **Lixiviat 7** |
| Température | °C | 23,10 | 20,50 | 24,60 | 17,00 | 22,30 | 21,60 | 19,80 |
| 02 | mg/l | 0,38 | 2,92 | 0,84 | 0,64 | 0,87 | 0,54 | 0,57 |
| MEST | mg/l | 53,93 | 414,10 | 123,00 | 69,00 | 1 000,00 | 2 400,00 | 680,00 |
| pH | unité pH | 8,59 | 8,75 | 8,00 | 8,24 | 8,80 | 7,70 | 7,80 |
| Conductivité à 25°C | µS/cm | 29 687,00 | 35 855,00 | 30 687,00 | 25 257,00 | 17 100,00 | 25 530,00 | 12 656,70 |
| TAC | °F | 1424,50 | 1 767,00 | 1 322,00 | 996,00 | 1 985,60 | 1 012,00 | 1659,00 |
| Bicarbonates | mg/l | 3 444,28 | 26 494,00 | 14 790,00 | 11 962,00 | 2 864,20 | 12 726,00 | 16 853,00 |
| DBO₅ | mg/l | 540,43 | 4 157,20 | 1193,90 | 616,60 | 2 400,00 | 41 000,00 | 52 000,00 |
| DCO | mg/l | 1 283,85 | 9 876,00 | 7 320,00 | 6 543,00 | 10 310,00 | 66 000,00 | 147 913,00 |
| Nitrites | mg/l N | < 0,24 | < 1,8170 | < 1,11779 | < 1,1337 | 21,00 | < 1 | |
| Nitrates | mg/l N | < 2,52 | < 19,372 | < 1,088 | < 3,837 | < 20 | < 1 | |
| Azote kjedahl | mg/l N | 543,58 | 4 181,00 | 3 276,00 | 2 412,00 | 1 750,00 | 2 400,00 | 3 397,00 |
| N-ammoniacal | mg/l N | 446,42 | 3 434,00 | 2 597,00 | 1 965,00 | 1 920,00 | 2 820,00 | 2 511,00 |
| Chlorures | mg/l | 656,57 | 5 050,50 | 3 887,90 | 3 484,20 | 2 000,00 | 9 400,00 | 7 400,00 |
| Sulfates | mg/l | 71,03 | 546,41 | 106,75 | 196,03 | 73,00 | 17,83 | 238,70 |
| Calcium | mg/l | 29,15 | 224,22 | 42,71 | 76,76 | 318,32 | 95,43 | 167,56 |
| Magnésium | mg/l | 12,87 | 98,98 | 54,10 | 54,81 | 103,45 | 28,90 | 79,46 |
| Sodium | mg/l | 353,20 | 2 717,00 | 2 317,00 | 1 756,00 | 2 986,00 | 3 256,60 | 2 564,30 |
| Potassium | mg/l | 244,87 | 1 884,00 | 1 700,00 | 1262,00 | 2 015,90 | 1 327,80 | 1491,60 |
| Phosphore | mg/l | 3,22 | 25,55 | 17,30 | 32,54 | 57,00 | 18,56 | 47,30 |

| | | Valeurs extrêmes | |
|---|---|---|---|
| **Analyse** | **Unités** | **Valeurs mini** | **Valeurs maxi** |
| Température | °C | 17,00 | 24,60 |
| O2 | mg/l | 0,38 | 2,92 |
| MEST | mg/l | 53,93 | 2 400,00 |
| pH | unité pH | 7,70 | 8,80 |
| Conductivité à 25°C | µS/cm | 12 656,70 | 35 855,00 |
| TAC | °F | 996,00 | 1 985,60 |
| Bicarbonates | mg/l | 2 864,20 | 26 494,00 |
| DBO₅ | mg/l | 540,43 | 52 000,00 |
| DCO | mg/l | 1 283,85 | 147 913,00 |
| Nitrites | mg/l N | 21,00 | 21,00 |
| Nitrates | mg/l N | 0,00 | 0,00 |
| Azote kjedahl | mg/l N | 543,58 | 4 181,00 |
| N-ammoniacal | mg/l N | 446,42 | 3 434,00 |
| Chlorures | mg/l | 656,57 | 9 400,00 |
| Sulfates | mg/l | 17,83 | 546,41 |
| Calcium | mg/l | 29,15 | 318,32 |
| Magnésium | mg/l | 12,87 | 103,45 |
| Sodium | mg/l | 353,20 | 3 256,60 |
| Potassium | mg/l | 244,87 | 2 015,90 |
| Phosphore | mg/l | 3,22 | 57,00 |

| | | | |
|---|---|---|---|
| DCO : Demande Chimique en Oxygène. DBO₅ : Demande Biologique en Oxygène. Azote kjedahl : azote total estimé par la méthode de Kjeldhal. | | | |

Une fois que les étapes de préchauffage du dispositif de filtration 10, de mise en service du dispositif d'atomisation 11 et de mise en service du dispositif d'abattement de panache 12 ont été effectuées, la seconde partie 9 de l'installation peut fonctionner dans un mode de fonctionnement dit normal.

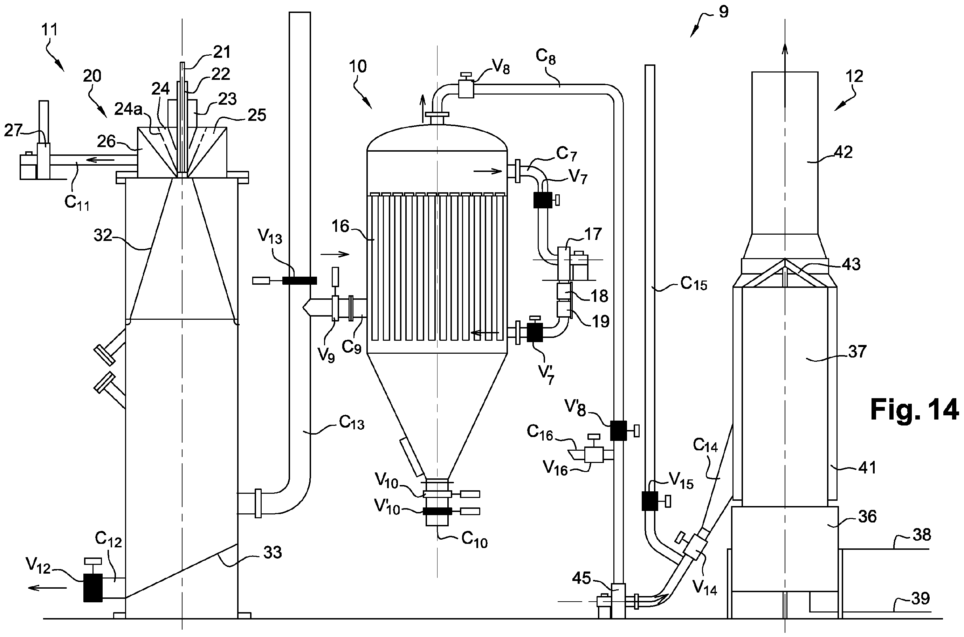

Un tel mode est illustré à la figure 14. Dans un tel mode, les vannes V7, V'7, V'10, V12, V13, V15 et V16 sont fermées et les vannes V8, V'8, V9, V10 et V14 sont ouvertes. Les ventilateurs 27 et 45 sont démarrés, de même que les brûleurs 20 et 36.

Dans un tel mode de fonctionnement, de l'air de pulvérisation est amené dans le canal 21, le lixiviat ou le concentrat de lixiviat obtenu après un pré-traitement par acidification issu de la conduite C6 est amené dans le canal 22, de l'air de combustion est amené dans le canal 23, du gaz de combustion est amené dans le canal 25 et de l'air de refroidissement est amené dans le canal 26. Comme précédemment, l'air amené dans le canal 23 pénètre dans le canal 24 puis dans le canal 25 au travers des orifices 24a, où il est mélangé au gaz de combustion précité afin de former un mélange qui est brulé dans le canal ou la chambre 25, avant de déboucher dans la zone de combustion 28. Parallèlement, le lixiviat ou le concentrat de lixiviat obtenu après un pré-traitement par acidification issu du canal 22 est pulvérisé à l'aide de la buse et de l'air issu du canal 21, les gouttelettes de lixiviat étant mises en contact avec les gaz de combustion chauds issus du canal 25, dans la zone de combustion 28 puis ensuite dans l'enceinte délimitée par la paroi tronconique 32. Les gouttelettes sont donc vaporisées par effet dit « flash ».

La chaleur nécessaire à la vaporisation de l'eau et ensuite au séchage des constituants minéraux et organiques contenus dans le lixiviat est apportée par la combustion du gaz, de préférence du biogaz, dans l'air. La partie combustible du biogaz est le méthane (CH₄) et l'équation de combustion est la suivante : CH₄ + 2O₂ → CO₂ + 2H₂O. Cette eau de combustion sous forme vapeur va s'ajouter à la vapeur de vaporisation du lixiviat.

Les gaz ainsi formés (vapeurs d'eau + poussières + gaz de combustion) sont alors évacués du dispositif d'atomisation 11 par la conduite C13 et amené dans l'enceinte 13 du dispositif de filtration 10 par la conduite C9.

Une partie des gouttelettes peut ne pas être vaporisée et peut former un résidu liquide, solide et/ou pâteux, qui peut être évacué ponctuellement ou de façon continue par la conduite C12.

Les poussières comprenant des constituants minéraux et organiques contenus dans le lixiviat ou le concentrat de lixiviat sont extraites de la partie basse du dispositif de filtration 10 à l'aide d'un sas, par exemple un sas constitué de deux vannes guillotines V10 et V'10 et sont ensuite stockées dans un conteneur, par exemple de type « Big Bag ».

Afin d'éviter la combustion de ces poussières, l'extraction et le stockage sont réalisés sous atmosphère contrôlée par introduction d'une partie des gaz issus du dispositif de filtration 10, à la sortie du sas.

Les gaz issus de la conduite C13 sont alors filtrés au travers des filtres 16 puis évacués du dispositif de filtration 10 au travers de la conduite C14, pour être dirigés vers le volume annulaire 41 par la conduite C14, à l'aide du ventilateur 45. Ces gaz sont mélangés aux gaz de combustion chauds issus de la chambre de combustion 37. Un tel mélange est favorisé par la présence du dispositif de mélange 43, comme expliqué précédemment, les gaz issus d'un tel mélange étant évacués par la cheminée 42. La température des gaz en sortie de la cheminée 42 est comprise entre 450 et 550°C, de façon à éviter la formation d'un panache de fumée dans l'air extérieur.

On notera que, en cas de panne ou d'arrêt du dispositif d'abattement de panache 12, la vanne V14 peut être fermée et la vanne V15 peut être ouverte, de façon à diriger les gaz issus du dispositif de filtration 10 dans l'atmosphère, par l'intermédiaire de la cheminée C15.

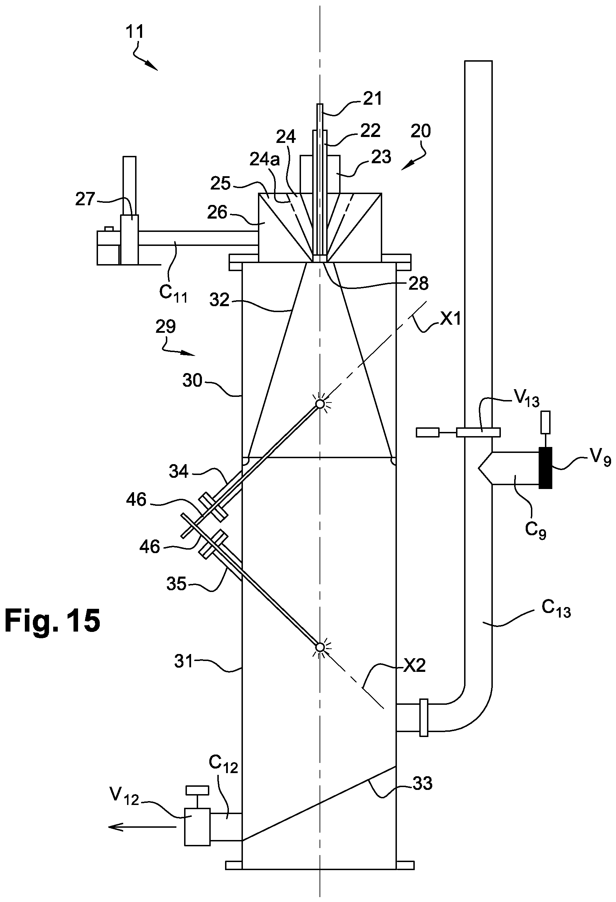

La **figure 15** illustre une opération de lavage du fût 29 du dispositif d'atomisation 11. Pour cela, au moins une canne de lavage 46 à tête rotative est introduite successivement dans les ouvertures d'accès 34, 35, la canne de lavage 46 étant alors orientée suivant les axes X1, X2 desdites ouvertures 34, 35. La canne de lavage 46 permet de former un jet à haute pression, par exemple un jet d'eau, permettant de laver les parois internes du fût 29, en particulier la paroi tronconique 32 et la paroi cylindrique formant la partie basse 31 du fût 29. La vanne V12 étant ouverte, les eaux de lavage peuvent être extraites par la canalisation C12.

Différents points de mesure (T1, P1, P2, Q1, T2, T3, Q2, T4, T5, T6 et Q3, tels que représentés sur la **figure 2**) ont été effectués au niveau de l'installation de traitement selon l'invention, sur une période de fonctionnement d'environ 1 an.

Le **tableau 3** suivant montre des valeurs de fonctionnement de l'installation de traitement selon l'invention. Lors des essais, la température de flamme du brûleur (20) était comprise entre 900°C et 1000°C. Le biogaz utilisé était pauvre en méthane (entre 21,6 et 27,8% de CH₄ dans un m³ de biogaz brûlé). La température des gaz brûlés et de la vapeur à la sortie du dispositif d'atomisation (11) a été maintenue à 130°C. L'énergie consommée par m³ était également stable et n'était pas influencée par la température de fonctionnement.

**Tableau 3**

| **N°** | **T1 (°C)** | **P1 (mbar)** | **P2 (mbar)** | **Q1 (l/h)** | **T2 (°C)** | **T3 (°C)** | **Q2 (Nm³/h)** | **%CH₄ dans le biogaz** | **PCI du biogaz (kWh/m³)** | **Energie consommée par m³ traité (kWh/m³)** |
|---|---|---|---|---|---|---|---|---|---|---|
| **1** | 1000 | 300 | 298 | 795 | 130 | 126 | 257 | 26,1 | 2,60 | 841 |
| **2** | 970 | 270 | 270 | 754 | 130 | 126 | 234 | 27,8 | 2,77 | 860 |
| **3** | 950 | 250 | 228 | 728 | 130 | 126 | 231 | 27,1 | 2,70 | 857 |
| **4** | 930 | 160 | 180 | 731 | 130 | 126 | 225 | 27,5 | 2,74 | 844 |
| **5** | 910 | 150 | 228 | 842 | 129 | 125 | 319 | 22,3 | 2,22 | 842 |
| **6** | 900 | 150 | 228 | 787 | 130 | 126 | 312 | 21,6 | 2,15 | 854 |

| | | | | | | | | | | |
|---|---|---|---|---|---|---|---|---|---|---|
| T1 : Température de flamme du brûleur (20). P1 : Pression de l'air dans le brûleur (20). P2 : Pression du biogaz dans le brûleur (20). Q1 : Débit de lixiviat traité. T2 : Température de la vapeur à la sortie du dispositif d'atomisation (11). T3 : Température dans le dispositif de filtration (10). Q2 : Débit du biogaz. | | | | | | | | | | |

Les débits de biogaz ainsi que l'énergie nécessaire pour amener la température du dispositif d'abattement de panache (12) à la température souhaitée d'environ 400 à 450°C sont représentés dans le **tableau 4** suivant.

**Tableau 4.**

| **N°** | **T4 (T°C)** | **T5 (°C)** | **T6 (°C)** | **Q3 (Nm³/h)** | **%CH₄ dans le biogaz** | **Energie consommée pour l'opération de montée en température (kWh)** |
|---|---|---|---|---|---|---|
| **1** | 126 | 905 | 447 | 64,4 | 26,1 | 175 |
| **2** | 126 | 962 | 450 | 64,2 | 27,8 | 177 |
| **3** | 126 | 955 | 449 | 63 | 27,1 | 170 |
| **4** | 126 | 945 | 442 | 68 | 27,5 | 186 |
| **5** | 125 | 939 | 432 | 62,5 | 22,3 | 138 |
| **6** | 126 | 956 | 436 | 54,7 | 21,6 | 118 |

| | | | | | | |
|---|---|---|---|---|---|---|
| T4 : Température à l'entrée du dispositif d'abattement de panache (12). T5 : Température du foyer du dispositif d'abattement de panache (12). T6 : Température des vapeurs et des gaz de combustion à la sortie du dispositif d'abattement de panache (12). Q3 : Débit du biogaz dans le dispositif d'abattement de panache (12). | | | | | | |

## Revendications

1. Procédé de traitement d'un lixiviat ou d'un concentrât de lixiviat chargé en constituants minéraux et organiques, la charge en constituants minéraux et organiques comprenant de 0,1% à 30% en matière sèche, dans lequel :
a. on introduit le lixiviat ou le concentrât de lixiviat dans une cuve d'acidification (2) dans laquelle sont ajoutés un acide puis le cas échéant une composition anti-mousse afin d'obtenir un mélange dont le pH est compris dans l'intervalle de 5 à 6,5, ledit mélange étant ensuite mis sous agitation pendant une durée de 2h à 4h, de préférence 3h, puis le pH est neutralisé (i) dans la cuve d'acidification (2) ou (ii) après avoir transféré ledit mélange, dans une cuve de tranquillisation (6),
b. on pulvérise, de préférence à l'aide d'une canne de pulvérisation bi-fluide, le lixiviat ou le concentrât de lixiviat traité à l'issue de l'étape a. sous forme de microgouttes dans des gaz de combustion chauds, de préférence du biogaz chaud, ayant une température égale ou supérieure à 900°C dans un dispositif d'atomisation (11), ledit dispositif d'atomisation (11) comportant :
- un brûleur à refroidissement par air (20) comprenant des moyens de pulvérisation (21, 22) aptes à former les microgouttes dudit lixiviat ou concentrât de lixiviat et à les éjecter suivant un premier flux présentant la forme d'un cône, et des moyens (23, 24, 25) aptes à générer un second flux desdits gaz de combustion chauds présentant la forme d'un cône de plus grande dimension que le premier flux et entourant le premier flux, au moins partiellement ;
- un fût (29) comportant une paroi tronconique (32) dont l'extrémité rétrécie délimite une ouverture, le premier flux et le second flux débouchant dans le volume interne de la paroi tronconique (32), par ladite ouverture, le premier flux et le second flux étant orientés suivant l'axe (A) de ladite paroi tronconique (32), le second flux entrant dans ledit volume interne en un écoulement conique concentrique pour réaliser à la sortie du brûleur (20) un contact flash avec le premier flux; des gaz comprenant des vapeurs d'eau, des poussières et des gaz de combustion et optionnellement des résidus non gazeux étant obtenus,
c. on transfère les gaz comprenant des vapeurs d'eau, des poussières et des gaz de combustion obtenus à l'étape b. vers un dispositif de filtration (10), de préférence à une température de 130°C, puis on récupère les poussières comprenant les constituants minéraux et organiques,
d. optionnellement, on transfère les gaz issus du dispositif de filtration (10) de l'étape c. vers un dispositif d'abattement de panache (12).

2. Procédé selon la revendication 1, **caractérisé en ce que** l'acide ajouté dans la cuve d'acidification est choisi parmi l'acide phosphorique, l'acide nitrique et l'acide sulfurique, et est de préférence l'acide sulfurique.

3. Procédé selon la revendication 1 ou 2, **caractérisé en ce que** la taille des microgouttes obtenues avant le contact avec les gaz de combustion chauds, est comprise dans l'intervalle de 50 à 110 microns, de préférence est de 70 microns.

4. Procédé selon l'une quelconque des revendications 1 à 3, **caractérisé en ce que** les gaz de combustion chauds utilisés à l'étape b. ont une température comprise dans l'intervalle de 900°C à 1200°C, de préférence de 950 °C.

5. Procédé selon l'une quelconque des revendications 1 à 4, **caractérisé en ce qu'**à l'étape c., un décolmatage des filtres est effectué à l'air.

6. Procédé selon l'une quelconque des revendications 1 à 5, **caractérisé en ce qu'**à l'étape c., les poussières récupérées sont stockées sous atmosphère neutre contrôlée par l'utilisation d'une partie des gaz issus du dispositif de filtration (10), l'autre partie des gaz issus du dispositif de filtration (10) étant évacuée.

7. Procédé selon l'une quelconque des revendications 1 à 6, **caractérisé en ce que** le fût (29) du dispositif d'atomisation (11) a un diamètre compris dans l'intervalle de 1 à 1,5 m et une hauteur comprise dans l'intervalle de 6 à 10 m.

8. Installation de traitement d'un lixiviat ou d'un concentrât de lixiviat pour mettre en œuvre le procédé selon l'une quelconque des revendications 1 à 7, **caractérisée en ce qu'**elle comporte :
- une cuve d'acidification (2) et optionnellement une cuve de tranquillisation (6) ;
- un dispositif d'atomisation (11) comportant :
- un brûleur à refroidissement par air (20) comprenant des moyens de pulvérisation (21, 22) du lixiviat ou du concentrât de lixiviat préalablement traité dans l'étape a. dudit procédé, aptes à former des microgouttes dudit lixiviat ou concentrât de lixiviat et à les éjecter suivant un premier flux présentant la forme d'un cône, et des moyens (23, 24, 25) aptes à générer un second flux de gaz de combustion chauds, de préférence du biogaz chaud, ayant une température égale ou supérieure à 900°C présentant la forme d'un cône de plus grande dimension que le premier flux et entourant le premier flux, au moins partiellement ;
- un fût (29) comportant une paroi tronconique (32) dont l'extrémité rétrécie délimite une ouverture, le premier flux et le second flux débouchant dans le volume interne de la paroi tronconique (32), par ladite ouverture, le premier flux et le second flux étant orientés suivant l'axe (A) de ladite paroi tronconique (32), le second flux entrant dans ledit volume interne en un écoulement conique concentrique pour réaliser à la sortie du brûleur (20) un contact flash avec le premier flux;
- un dispositif de filtration (10) relié au fût (29) du dispositif d'atomisation (11) et apte à filtrer les gaz issus dudit fût (29).

9. Installation selon la revendication 8, **caractérisée en ce que** les moyens de pulvérisation du brûleur (20) comportent un canal central (21) apte à être alimenté par une source d'air servant à la pulvérisation, un canal annulaire (22) entourant le canal central (21), apte à être alimenté par le lixiviat ou le concentrât de lixiviat préalablement traité dans l'étape a. dudit procédé, et une buse apte à former des microgouttes par pulvérisation du lixiviat ou du concentrât de lixiviat issu du canal central (21), à l'aide de l'air issu du canal annulaire (22).

10. Installation selon la revendication 8 ou 9, **caractérisée en ce que** les moyens de génération du flux de gaz de combustion chauds du brûleur (20) comportent un premier canal (24) apte à être alimenté par de l'air, un deuxième canal annulaire (25) entourant le premier canal (24) et apte à être alimenté par du gaz de combustion, le premier canal (24) comportant des trous (24a) débouchant dans le second canal (25), de manière à mélanger de l'air issu du premier canal (24) au gaz de combustion circulant dans le deuxième canal (25), un troisième canal (26) entourant le deuxième canal (25) et apte à être alimenté par de l'air, les parois radialement interne et externe du deuxième canal (25) étant aptes à être refroidies par l'air circulant dans le premier canal (24) et dans le troisième canal (26).

11. Installation selon l'une quelconque des revendications 8 à 10, **caractérisée en ce qu'**elle comporte un dispositif d'abattement de panache (12) comportant une chambre de combustion (37), un brûleur (36) apte à générer des gaz chauds dans la chambre de combustion (37), un canal annulaire (41) entourant la chambre de combustion (37), et des moyens (C8, C14, 45) aptes à faire circuler les gaz issus du dispositif de filtration dans le canal annulaire (41), lesdits gaz étant aptes à échanger de la chaleur avec la chambre de combustion (37).

12. Installation selon la revendication 11, **caractérisée en ce que** le dispositif d'abattement de panache (12) comporte une cheminée (42) dans laquelle débouche la chambre de combustion (37) et le canal annulaire (41), la chambre de combustion (37) étant équipée d'un dispositif de mélange (43) apte à être traversé par les gaz issus de la chambre de combustion (37), de manière à former un tourbillon lors du passage desdits gaz au travers du dispositif de mélange (43).

13. Installation selon la revendication 12, **caractérisée en ce que** le dispositif de mélange (43) présente une forme conique s'étendant suivant l'axe (B) de la chambre de combustion (37) et comportant des ouvertures (44) régulièrement réparties sur la circonférence.

14. Installation selon l'une quelconque des revendications 8 à 13, **caractérisée en ce que** le dispositif de filtration (10) comporte une enceinte (13) dans laquelle sont montés des filtres (16), et des moyens (C7, 17) de recirculation des gaz contenus dans l'enceinte (13), lesdits moyens de recirculation étant équipés de moyens (18, 19) de chauffage des gaz.

15. Installation selon l'une quelconque des revendications 8 à 14, **caractérisée en ce que** le dispositif d'atomisation (11) comporte une cheminée (C13) et des moyens (V13, V9) aptes à diriger les gaz issus du dispositif d'atomisation (11) vers la cheminée (C13), dans un mode de mise en service du dispositif d'atomisation (11), et aptes à diriger les gaz issus du dispositif d'atomisation (11) vers le dispositif de filtration (10), dans un mode de fonctionnement normal de l'installation.

## Patentansprüche

1. Verfahren zur Behandlung von Sickerwasser oder eines Sickerwasserkonzentrats mit mineralischen und organischen Bestandteilen, wobei der Anteil mineralischer und organischer Bestandteile 0,1% bis 30% Trockenmasse umfasst, bei dem:
a. das Sickerwasser oder Sickerwasserkonzentrat einem Versauerungsbehälter (2) zugeführt wird, dem eine Säure und anschließend gegebenenfalls eine Entschäumungszusammensetzung zugegeben wird, um eine Mischung mit einem pH-Wert von 5 bis 6,5 zu erhalten, wobei die Mischung anschließend für eine Dauer von 2 bis 4 Stunden, vorzugsweise 3 Stunden, gerührt, und der pH-Wert (i) im Versauerungsbehälter (2) oder (ii), nachdem die Mischung in einen Beruhigungsbehälter (6) umgefüllt wurde, neutralisiert wird,
b. das behandelte Sickerwasser oder Sickerwasserkonzentrat nach Beendigung von Schritt a. vorzugsweise mithilfe eines Zweiflüssigkeiten-Sprühstabs in Form von Mikrotropfen, die in heißen Verbrennungsgasen, vorzugsweise heißem Biogas, enthalten sind, mit einer Temperatur größer/gleich 900°C in eine Zerstäubungsvorrichtung (11) einsprüht wird, wobei die Zerstäubungsvorrichtung (11) Folgendes umfasst:
- einen luftgekühlten Brenner (20), der Sprühmittel (21, 22) umfasst, die aus dem Sickerwasser oder Sickerwasserkonzentrat Mikrotropfen bilden und in einem ersten kegelförmigen Strom ausstoßen können, und Mittel (23, 24, 25), die einen zweiten kegelförmigen Strom der heißen Verbrennungsgase erzeugen können, der größer als der erste Strom ist und den ersten Strom zumindest teilweise umgibt;
- ein Behälter (29) mit einer kegelstumpfförmigen Wandung (32), deren verengtes Ende eine Öffnung begrenzt, wobei der erste Strom und der zweite Strom durch die Öffnung in das Innenvolumen der kegelstumpfförmigen Wandung (32) strömen, wobei der erste Strom und der zweite Strom entlang der Achse (A) der kegelstumpfförmigen Wandung (32) ausgerichtet sind, wobei der zweite Strom in einem konzentrischen konischen Ablauf in das Innenvolumen eintritt, um am Ausgang des Brenners (20) einen Flashkontakt mit dem ersten Strom herzustellen, wobei Gase erhalten werden, die Wasserdämpfe, Stäube und Verbrennungsgase und gegebenenfalls nichtgasförmige Rückstände umfassen,
c. die in Schritt b. erhaltenen Gase, die Wasserdämpfe, Stäube und Verbrennungsgase umfassen, zu einer Filtrationsvorrichtung (10), vorzugsweise bei einer Temperatur von 130°C, geleitet und die Stäube mit den mineralischen und organischen Bestandteilen zurückgewonnen werden,
d. optional die aus der Filtrationsvorrichtung (10) von Schritt c. kommenden Gase zu einer Vorrichtung zur Minderung der Fahne (12) geleitet werden.

2. Verfahren nach Anspruch 1, **dadurch gekennzeichnet, dass** die dem Versauerungsbehälter zugegebene Säure ausgewählt wird aus Phosphorsäure, Salpetersäure und Schwefelsäure, und vorzugsweise Schwefelsäure ist.

3. Verfahren nach Anspruch 1 oder 2, **dadurch gekennzeichnet, dass** die vor dem Kontakt mit den heißen Verbrennungsgasen erhaltenen Mikrotropfen 50 bis 110 Mikron, vorzugsweise 70 Mikron groß sind.

4. Verfahren nach einem der Ansprüche 1 bis 3, **dadurch gekennzeichnet, dass** die in Schritt b. verwendeten heißen Verbrennungsgase eine Temperatur von 900°C bis 1200°C, vorzugsweise 950°C haben.

5. Verfahren nach einem der Ansprüche 1 bis 4, **dadurch gekennzeichnet, dass** in Schritt c. eine Reinigung der Filter mit Luft durchgeführt wird.

6. Verfahren nach einem der Ansprüche 1 bis 5, **dadurch gekennzeichnet, dass** in Schritt c. die zurückgewonnenen Stäube durch Verwendung eines Teils der Gase aus der Filtrationsvorrichtung (10) in einer kontrollierten neutralen Atmosphäre gelagert werden, wobei der andere Teil der Gase aus der Filtrationsvorrichtung (10) abgeleitet wird.

7. Verfahren nach einem der Ansprüche 1 bis 6, **dadurch gekennzeichnet, dass** der Behälter (29) der Zerstäubungsvorrichtung (11) einen Durchmesser von 1 bis 1,5 m und eine Höhe von 6 bis 10 m hat.

8. Anlage zur Behandlung von Sickerwasser oder eines Sickerwasserkonzentrats zur Durchführung des Verfahrens nach einem der Ansprüche 1 bis 7, **dadurch gekennzeichnet, dass** sie folgendes umfasst:
- einen Versauerungsbehälter (2) und gegebenenfalls einen Beruhigungsbehälter (6);
- eine Zerstäubungsvorrichtung (11), die folgendes umfasst:
- einen luftgekühlten Brenner (20), der Mittel (21, 22) zum Sprühen des Sickerwassers oder Sickerwasserkonzentrats umfasst, das zuvor in Schritt a. des Verfahrens behandelt wurde, wobei diese in der Lage sind, aus dem Sickerwasser oder Sickerwasserkonzentrat Mikrotropfen zu bilden und sie in einem ersten kegelförmigen Strom auszustoßen, und Mittel (23, 24, 25), die in der Lage sind, einen zweiten kegelförmigen Strom heißer Rauchgase, vorzugsweise heißen Biogases, mit einer Temperatur größer/gleich 900°C zu erzeugen, wobei dieser größer als der erste Strom ist und den ersten Strom zumindest teilweise umgibt;
- einen Behälter(29) mit kegelstumpfförmiger Wandung (32), dessen verengtes Ende eine Öffnung begrenzt, wobei der erste und der zweite Strom durch die Öffnung in das Innenvolumen der kegelstumpfförmigen Wandung (32) strömen, wobei der erste und der zweite Strom entlang der Achse (A) der kegelstumpfförmigen Wandung (32) ausgerichtet sind, wobei der zweite Strom in einem konzentrischen kegelförmigen Strom in das Innenvolumen eintritt, um am Ausgang des Brenners (20) einen Flashkontakt mit dem ersten Strom herzustellen;
- eine Filtrationsvorrichtung (10), die mit dem Behälter (29) der Zerstäubungsvorrichtung (11) verbunden und in der Lage ist, die vom Behälter (29) kommenden Gase zu filtern.

9. Anlage nach Anspruch 8, **dadurch gekennzeichnet, dass** die Sprühmittel des Brenners (20) einen zentralen Kanal (21) umfassen, der von einer zum Sprühen verwendeten Luftquelle versorgt werden kann, einen den zentralen Kanal (21) umgebenden ringförmigen Kanal (22), dem das zuvor in Schritt a. des Verfahrens behandelte Sickerwasser oder Sickerwasserkonzentrat zugeführt werden kann, und eine Düse, die durch Zerstäubung des Sickerwassers oder Sickerwasserkonzentrats des zentralen Kanals (21) mithilfe der Luft aus dem ringförmigen Kanal (22) Mikrotropfen bilden kann.

10. Anlage nach Anspruch 8 oder 9, **dadurch gekennzeichnet, dass** die Mittel des Brenners (20) zum Erzeugen des Stroms heißer Verbrennungsgase einen ersten Kanal (24) umfassen, dem Luft zugeführt werden kann, einen den ersten Kanal (24) umgebenden zweiten ringförmigen Kanal (25), dem Rauchgas zugeführt werden kann, wobei der erste Kanal (24) Löcher (24a) umfasst, die in den zweiten Kanal (25) münden, so dass die aus dem ersten Kanal (24) kommende Luft mit dem im zweiten Kanal (25) strömenden Verbrennungsgas gemischt wird, wobei ein dritter Kanal (26) den zweiten Kanal (25) umgibt und diesem Luft zugeührt werden kann, wobei die radial innere und die radial äußere Wandung des zweiten Kanals (25) durch die im ersten Kanal (24) und im dritten Kanal (26) strömende Luft gekühlt werden können.

11. Anlage nach einem der Ansprüche 8 bis 10, **dadurch gekennzeichnet, dass** sie eine Vorrichtung zur Minderung der Fahne (12) umfasst, die eine Brennkammer (37), einen Brenner (36) zur Erzeugung heißer Gase in der Brennkammer (37), einen die Brennkammer (37) umgebenden ringförmigen Kanal (41) und Mittel (C8, C14, 45) zum Zirkulieren der aus der Filtrationsvorrichtung im ringförmigen Kanal (41) kommenden Gase umfasst, wobei diese Gase in der Lage sind, Wärme mit der Brennkammer (37) auszutauschen.

12. Anlage nach Anspruch 11, **dadurch gekennzeichnet, dass** die Vorrichtung zur Minderung der Fahne (12) einen Schornstein (42) umfasst, in den die Brennkammer (37) und der ringförmige Kanal (41) münden, wobei die Brennkammer (37) mit einer Mischvorrichtung (43) ausgestattet ist, die von den Gasen aus der Brennkammer (37) durchströmt werden kann, so dass ein Wirbel entsteht, wenn diese Gase durch die Mischvorrichtung (43) strömen.

13. Anlage nach Anspruch 12, **dadurch gekennzeichnet, dass** die Mischvorrichtung (43) eine Kegelform aufweist, die sich entlang der Achse (B) der Brennkammer (37) erstreckt und Öffnungen (44) aufweist, die gleichmäßig über den Umfang verteilt sind.

14. Anlage nach einem der Ansprüche 8 bis 13, **dadurch gekennzeichnet, dass** die Filtrationsvorrichtung (10) ein Gehäuse (13) umfasst, in dem Filter (16) montiert sind, und Mittel (C7, 17) zur Rückführung der im Gehäuse (13) enthaltenen Gase, wobei die Rückführmittel mit Mitteln (18, 19) zum Erhitzen der Gase ausgestattet sind.

15. Anlage nach einem der Ansprüche 8 bis 14, **dadurch gekennzeichnet, dass** die Zerstäubungsvorrichtung (11) einen Schornstein (C13) und Mittel (V13, V9) umfasst, die in der Lage sind, die Gase in einem Inbetriebnahmemodus aus der Zerstäubungsvorrichtung (11) zum Schornstein (C13) und in einem normalen Betriebsmodus der Anlage aus der Zerstäubungsvorrichtung (11) zur Filtervorrichtung (10) zu leiten.

## Claims

1. A method for treating a leachate or a leachate concentrate loaded with mineral and organic constituents, the load of mineral and organic constituents comprising from 0.1% to 30% by weight of dry matter, wherein:
a. the leachate or the leachate concentrate is introduced into an acidification tank (2) in which an acid is added thereto and then, if necessary, an anti-foaming composition in order to obtain a mixture whose pH is in the range of 5 to 6.5, said mixture then being stirred for a period of 2hrs to 4hrs, preferably 3hrs, then the pH is neutralized (i) in the acidification tank (2) or (ii) after having transferred said mixture into a settling tank (6),
b. preferably using a bi-fluid spray rod, the leachate or the leachate concentrate treated at the end of step a. is sprayed in the form of microdrops in hot combustion gases, preferably hot biogas, having a temperature equal to or greater than 900°C into an atomizing device (11), said atomizing device (11) comprising:
- an air-cooled burner (20) comprising spraying means (21, 22) adapted to form the microdrops of said leachate or leachate concentrate and to eject same in a first cone-shaped flux, and means (23, 24, 25) adapted to generate a second flux of said hot combustion gases having the shape of a larger cone than the first flux and at least partially surrounding the first flux;
- a shaft (29) having a tapered wall (32) the narrow end of which defines an opening, with the first flux and the second flux reaching the internal volume of the tapered wall (32), through said opening, with the first flux and the second flux being oriented along the axis (A) of said tapered wall (32), the second flux entering said internal volume as a concentric conical flow to cause a flash contact with the first flux at the burner (20) outlet; gases comprising water vapors, dusts and combustion gases and optionally non-gaseous residues being obtained,
c. the gases comprising water vapors, dusts and combustion gases obtained in step b. are transferred to a filtration device (10), preferably at a temperature of 130°C, then the dusts comprising the mineral and organic constituents are recovered,
d. optionally, the gases from the filtration device (10) of step c. are transferred to a plume allaying device (12) .

2. A method according to claim 1, **characterized in that** the acid added in the acidification tank is selected from phosphoric acid, nitric acid and sulfuric acid, and is preferably sulfuric acid.

3. A method according to claim 1 or 2, **characterized in that** the size of the microdrops obtained before contact with the hot combustion gases, is in the range of 50 to 110 microns, preferably is 70 microns.

4. A method according to any one of claims 1 to 3, **characterized in that** the hot combustion gases used in step b. have a temperature in the range of 900°C to 1,200°C, preferably 950°C.

5. A method according to any one of claims 1 to 4, **characterized in that** in step c, the unclogging of filters is performed in the air.

6. A method according to any one of claims 1 to 5, **characterized in that** in step c., the recovered dusts are stored in a neutral atmosphere controlled by the use of a portion of the gases from the filtration device (10), with the other portion of the gases from the filtration device (10) being evacuated.

7. A method according to any one of claims 1 to 6, **characterized in that** the shaft (29) of the atomizing device (11) has a diameter is in the range of 1 to 1.5m and a height in the range of 6 to 10m.

8. A facility for treating a leachate or a leachate concentrate for implementing the method according to any one of claims 1 to 7, **characterized in that** it comprises:
- an acidification tank (2), and optionally a settling tank (6);
- an atomizing device (11) comprising:
- an air-cooled burner (20) comprising means for spraying (21, 22) the leachate or the leachate concentrate, previously treated in step a. of said method, capable of forming microdrops of said leachate or leachate concentrate and of ejecting same as a first cone-shaped flux, means (23, 24, 25) capable of generating a second hot gas flux, preferably hot biogas, having a temperature equal to or greater than 900°C having the shape of a larger cone than the first flux and at least partially surrounding the first flux,
- a shaft (29) having a tapered wall (32) whose narrow end defines an opening, the first flux and the second flux reaching the internal volume of the tapered wall (32), through said opening, with the first flux and the second flux being oriented along the axis (A) of said tapered wall (32), with the second flux entering the internal volume as a concentric conical flow to cause a flash contact with the first flux at the burner (20) outlet;
- a filtration device (10) connected to the shaft (29) of the atomizing device (11) and adapted to filter the gases from said shaft (29).

9. A facility according to claim 8, **characterized in that** the burner (20) spraying means comprise a central channel (21) adapted to be supplied by a source of air used for spraying, with an annular channel (22) surrounding the central channel (21), adapted to be supplied with the leachate or the leachate concentrate previously treated in step a. of said method, and a nozzle capable of forming microdrops by spraying the leachate or the leachate concentrate from the central channel (21), using air from the annular channel (22).

10. A facility according to claim 8 or 9, **characterized in that** the means for generating the hot gas flux of the burner comprises a first channel (24) adapted to be supplied with air, with a second annular channel (25) surrounding the first channel (24) and adapted to be supplied with combustion gas, with the first channel (24) having holes (24a) opening into the second channel (25), so as to mix air from the first channel (24) to the combustion gas circulating in the second channel (25), with a third channel (26) surrounding the second channel (25) and adapted to be supplied with air, with the radially inner and outer walls of the second channel (25) being able to be cooled by the air circulating in the first channel (24) and in the third channel (26).

11. A facility according to any one of claims 8 to 10, **characterized in that** it comprises a plume allaying device (12) having a combustion chamber (37), a burner (36) capable of generating hot gas in the combustion chamber (37), an annular channel (41) surrounding the combustion chamber (37), and means (C8, C14, 45) able to circulate the gases from the filtration device in the annular channel (41), with said gases being able to exchange heat with the combustion chamber (37).

12. A facility according to claim 11, **characterized in that** the plume allaying device (12) comprises a chimney (42) in which the combustion chamber (37) and the annular channel (41) open, the combustion chamber (37) being equipped with a mixing device (43) adapted to be traversed by the gases from the combustion chamber (37), so as to form a vortex when said gases flow through the mixing device (43).

13. A facility according to claim 12, **characterized in that** the mixing device (43) has a conical shape extending along the axis (B) of the combustion chamber (37) and having openings (44) regularly distributed over the circumference.

14. A facility according to any one of claims 8 to 13, **characterized in that** the filtration device (10) comprises an enclosure (13) in which filters (16) are mounted, and means (C7, 17) for recirculating the gases contained in the enclosure (13), with said recirculation means being equipped with means (18, 19) for heating the gases.

15. A facility according to any one of claims 8 to 14, **characterized in that** the atomizing device (11) comprises a chimney (C13) and means (V13, V9) adapted to direct the gas from the atomizing device (11) to the chimney (C13), in a startup mode of the atomizing device (11), and able to direct the gas from the atomizing device (11) to the filtration device (10), in a normal operating mode of the facility.
